(19) Europäisches Patentamt
European Patent Office
Office européen des brevets

(11) Publication number: **0 144 844**
**B1**

(12) **EUROPEAN PATENT SPECIFICATION**

(45) Date of publication of patent specification: **22.02.89**

(21) Application number: **84113916.5**

(22) Date of filing: **16.11.84**

(51) Int. Cl.[4]: **C 07 C 103/30,** C 07 C 91/12, C 07 C 103/44, C 07 C 143/74, C 07 C 143/63, C 07 C 87/30, C 07 C 93/02 // B01F17/18, B01F17/28, B01F17/38, B01F17/22, B01F17/26

# (54) Fluorine-containing compounds.

(30) Priority: **18.11.83 JP 217583/83**
**30.11.83 JP 227344/83**
**14.12.83 JP 236567/83**

(43) Date of publication of application:
**19.06.85 Bulletin 85/25**

(45) Publication of the grant of the patent:
**22.02.89 Bulletin 89/08**

(84) Designated Contracting States:
**DE FR GB IT**

(56) References cited:
**DE-C-1 140 188**
**GB-A-2 052 537**
**GB-A-2 116 970**

(73) Proprietor: **DAIKIN INDUSTRIES, LIMITED**
**No. 1-12-39, Umeda Kita-ku**
**Osaka-shi Osaka-fu (JP)**

(72) Inventor: **Hisamoto, Iwao**
**11-14, Takanodai 3-chome**
**Suita-shi Osaka-fu (JP)**
Inventor: **Yamana, Masayuki**
**21-21, Hitotsuya 2-chome**
**Settsu-shi Osaka-fu (JP)**

(74) Representative: **Hansen, Bernd, Dr.rer.nat. et al**
**Hoffmann, Eitle & Partner Patentanwälte**
**Arabellastrasse 4**
**D-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 144 844 B1**

Courier Press, Leamington Spa, England.

## Description

### FIELD OF THE INVENTION

The present invention relates to fluorine-containing compounds. More particularly, it relates to fluorine-containing compounds which are soluble in organic solvents and greatly reduce their surface tension.

### BACKGROUND OF THE INVENTION

Hitherto, fluorine-containing compounds, for example, of the following formulas are known:

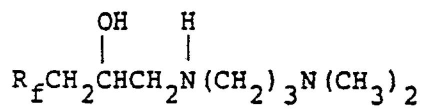

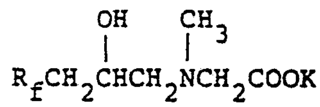

and

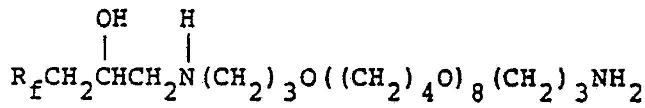

wherein $R_f$ is the same as defined below (cf. U.S. Pat. No. 4,165,338).

Although these fluorine-containing compounds are useful as leveling agents for various waxes, additives for foam extinguishing agents, surface-modifying agents of resins, etc., they have some drawbacks such that their solubility in solvents is poor and even if they are dissolved in the solvents, they are poor in lowering the surface tension thereof and that they have poor compatibility with a plasticizer contained in the resin.

Also, a fluorine-containing quaternary ammonium compound of the following formula is known:

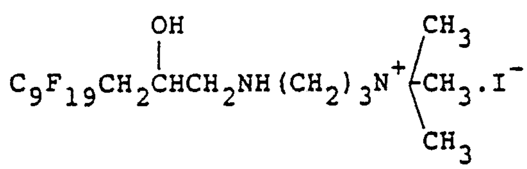

Although this quarternary ammonium compound is soluble in water, its solubility in an organic solvent other than lower alcohols is poor.

Further, a fluorine-containing betaine compound of the following formula is known:

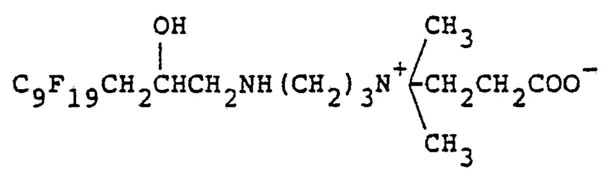

Although this betaine compound is soluble in water, its solubility in organic solvents is poor.

### SUMMARY OF THE INVENTION

One object of the invention is to provide a novel fluorine-containing compound which has excellent solubility in an organic solvent.

Another object of the invention is to provide a fluorine-containing compound which greatly decreases surface tension of an organic solvent in which the compound is dissolved.

### DETAILED DESCRIPTION OF THE INVENTION

The novel fluorine-containing compound of the invention has a following general formula:

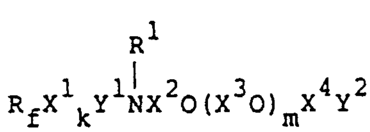

(I)

wherein

$R_f$ is a $C_3$—$C_{21}$ fluorinated hydrocarbon group or a $C_3$—$C_{21}$ fluorinated oxyhydrocarbon group;

$X^1$ is a $C_1$—$C_{11}$ hydrocarbon group;

$X^2$, $X^3$ and $X^4$ are each a $C_2$—$C_6$ hydrocarbon group;
$Y^1$ is a group of the formula:

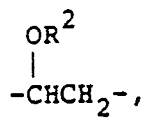, -CO-, -SOO- or $-(CH_2)_n-$;

$Y^2$ is a group of the formula:

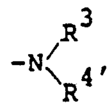, $-W^1-Z^1$ or 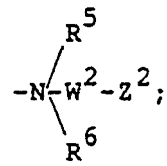;

$W^1$ is a group of the formula:

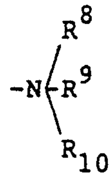 or 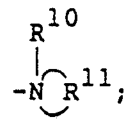;

$W^2$ is a $C_1$—$C_{10}$ hydrocarbon group optionally having —OH or —COOH or a amide group in the backbone;
$Z^1$ is halogen or a group of the formula:

$-OR^{12}$, 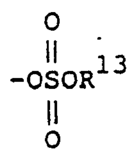, 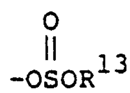, $-CO_3R^{13}$ or $-COOR^{13}$;

$Z^2$ is a group of the formula:

-COO, 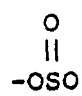 or 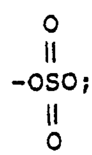;

$R^1$ is hydrogen or a $C_1$—$C_5$ hydrocarbon group;
$R^2$ is hydrogen or a $C_2$—$C_4$ acyl group;
$R^3$ is hydrogen or a group of the formula:

$$—(X^1O)_qH \text{ or } —R^7Z^3;$$

$R^4$ is a group of the formula:

$$—(X^1O)_qH \text{ or } —R^7Z^3;$$

$R^5$ and $R^6$ are each a $C_1$—$C_{20}$ hydrocarbon group or a group of the formula:

$$—(X^1O)_qH, —X^1{}_kCOOM, —R_f \text{ or } —Y^1X^1{}_kR_f;$$

$Z^3$ is a group of the formula:

—COOM, $—SO_3M$, $—OSO_3M$, 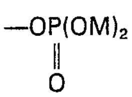 or 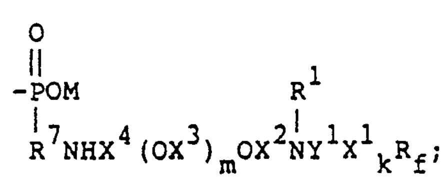;

$R^7$ is a $C_1$—$C_{20}$ hydrocarbon group or a group of the formula:

$$—(CH_2CH_2OCH_2CH_2)_r—;$$

$R^8$, $R^9$ and $R^{10}$ are each a $C_1$—$C_{20}$ hydrocarbon group or a group of the formula:

$$—(X^1O)_qH,\ —R_f \text{ or } —Y^1X^1_kR_f;$$

$R^{11}$ is $C_2$—$C_6$ alkylene group optionally having one or two oxygen or sulfur atoms;
$R^{12}$ is hydrogen, a $C_1$—$C_{20}$ hydrocarbon group or a $C_2$—$C_{20}$ acyl group;
$R^{13}$ is hydrogen or a $C_1$—$C_{20}$ hydrocarbon group;
M is hydrogen, an alkali metal, an alkaline earth metal of a $NH_4$ group;
k is zero or one;
m is an integer of 1 to 50;
n is an integer of 1 to 5;
q is an integer of 1 to 20; and
r is an integer of 1 to 5.

$R_f$ group in the formula (I) has 3 to 21, preferably 5 to 15 carbon atoms. Preferably, $R_f$ is a $C_5$—$C_{15}$ fluorinated aliphatic group, $C_5$—$C_{15}$ fluorinated oxyhydrocarbon groups and a $C_5$—$C_{15}$ perfluorinated saturated aliphatic group. Specific examples of $R_f$ group are groups of the formula:

$$C_tF_{2t+1}-,\ H-(C_tF_{2t})-,\ C_tF_{(2t-1)} \text{ and}$$

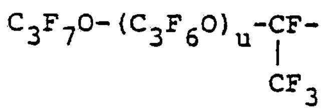

wherein t is an integer of 3 to 21 and u is an integer of 0 to 5.

The hydrocarbon group may be an aliphatic, alicyclic, aromatic or aralkyl and/or straight or branched group which is optionally substituted with one or more suitable substituents such as —OH, —COOH, etc.

When the hydrocarbon group is a monovalent group, it is preferably an alkyl group. When it is a divalent group, it is preferably an alkenyl group.

Halogen is usually iodine, bromine or chlorine.

m is preferably an integer of 5 to 30.

$X^1$, $X^2$, $X^3$ and $X^4$ are each preferably a $C_2$—$C_4$ aliphatic group, more preferably, $—CH_2CH_2—$, $—CH(CH_3)CH_2—$ and $—(CH_2)_4—$.

$Z^1$ is preferably halogen or a group of the formula:

$$—OR^{12} \text{ or } —OSO_3R^{13}.$$

$R^{12}$ is preferably hydrogen or a $C_1$—$C_6$ aliphatic group, more preferably hydrogen or a $C_1$—$C_6$ saturated alkyl group.

$R^{13}$ is preferably hydrogen or a $C_1$—$C_6$ aliphatic group, more preferably a $C_1$—$C_6$ saturated alkyl group.

$R^1$ and $R^2$ are each preferably hydrogen.

Each of $R^5$ to $R^{10}$ which is the hydrocarbon group is preferably an aliphatic, aryl or aralkyl group.

More preferably, $R^5$ and $R^6$ are each a group of the formula:

$$—(X^1O)_qH,\ —X^1_kCOOM,\ —R_f \text{ or } —Y^1X^1_kR_f.$$

Specific examples of the compound (I) wherein $Y^2$ is

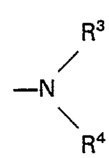

are as follows:

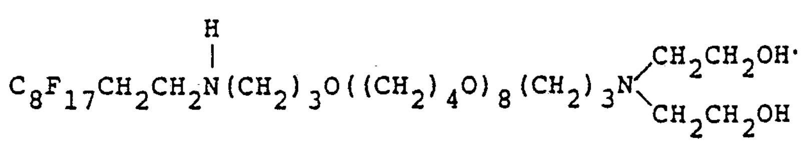

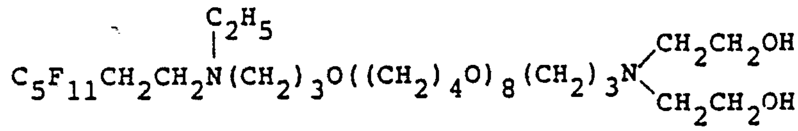

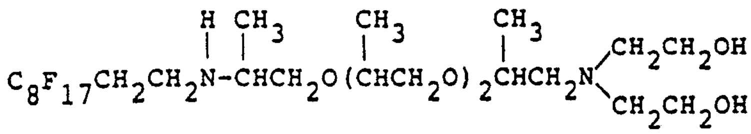

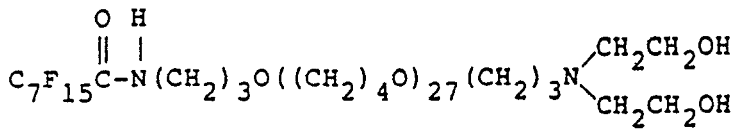

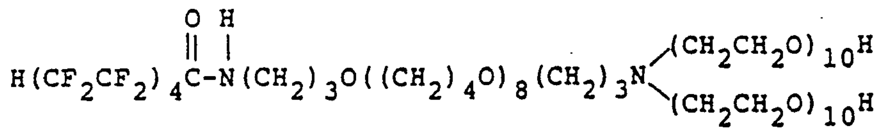

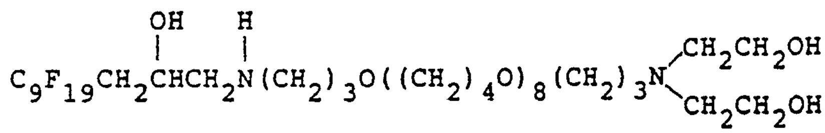

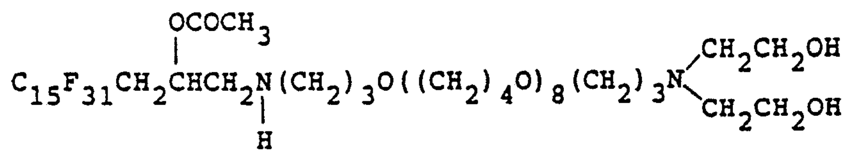

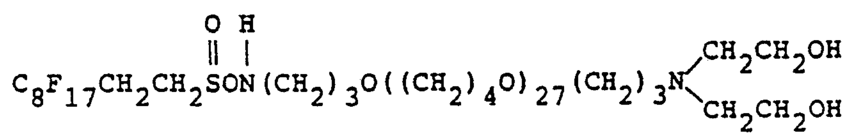

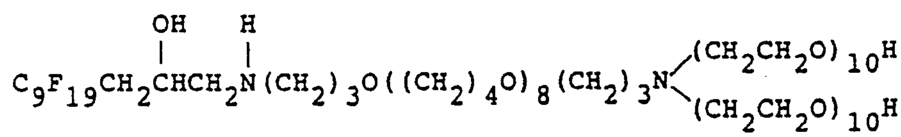

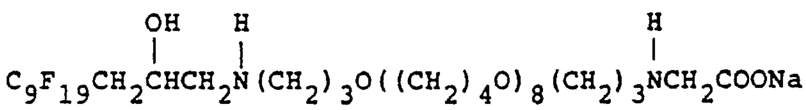

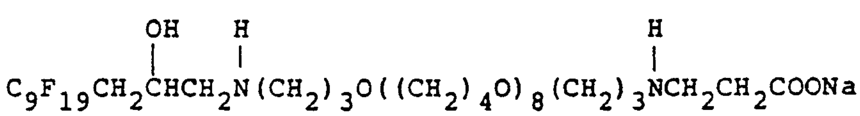

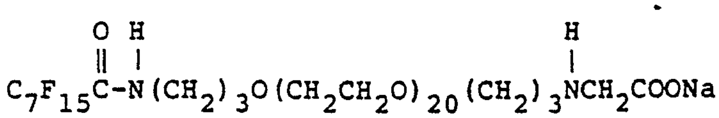

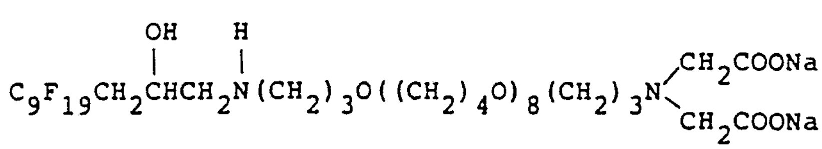

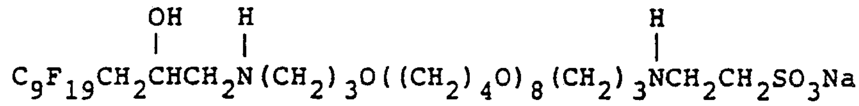

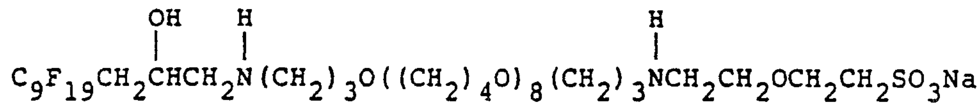

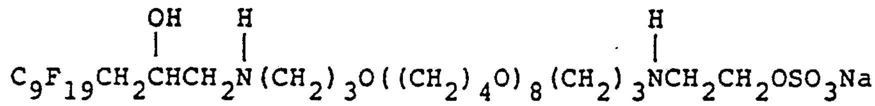

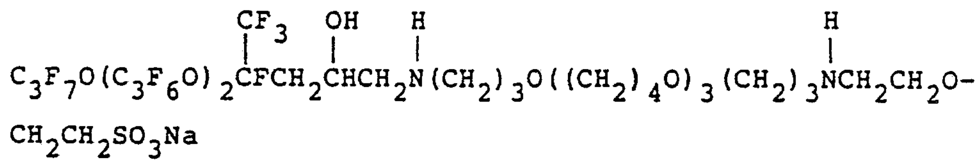

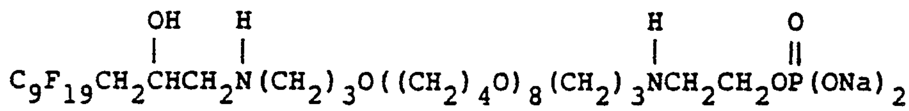

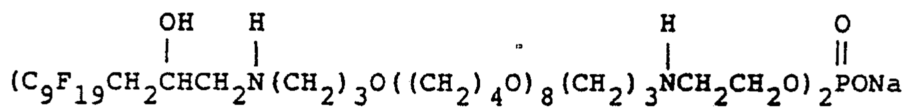

Specific examples of the compound (I) wherein $Y^2$ is $-W^1-Z^1$ are as follows:

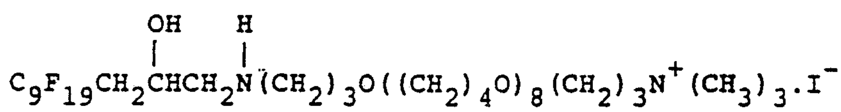

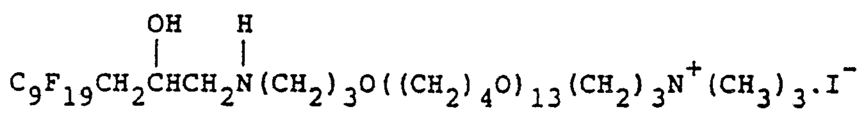

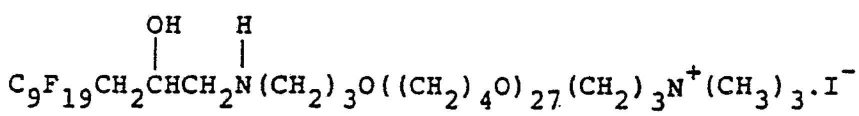

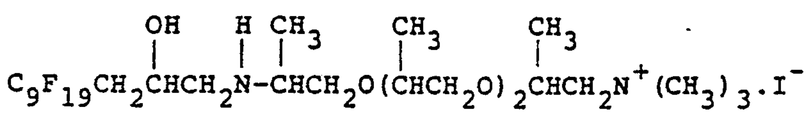

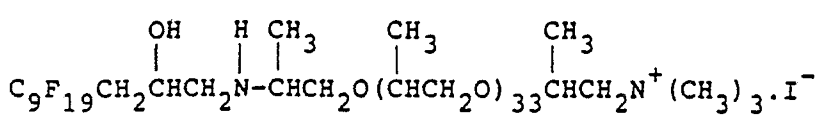

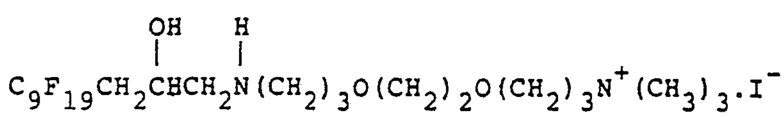

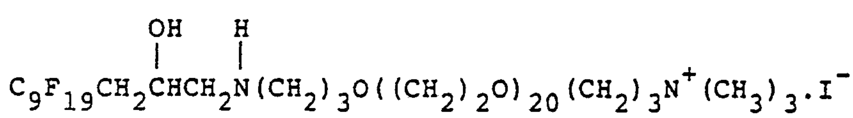

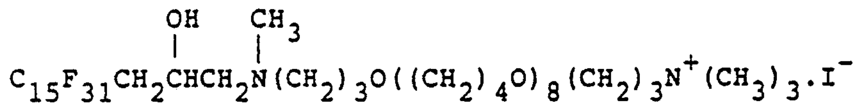

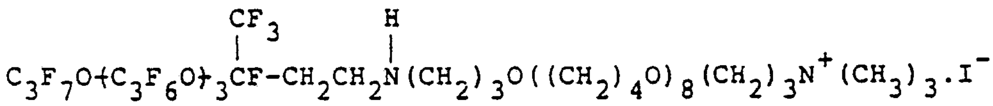

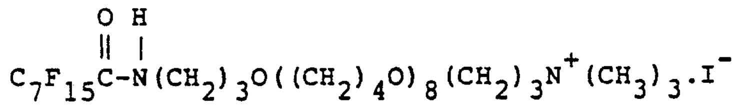

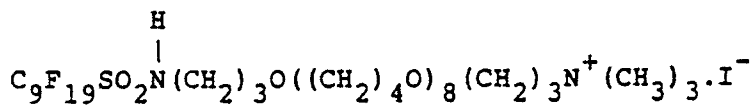

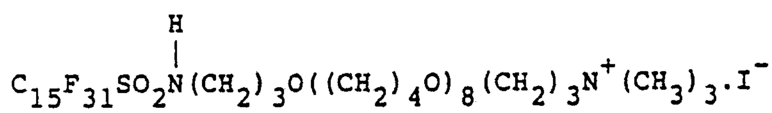

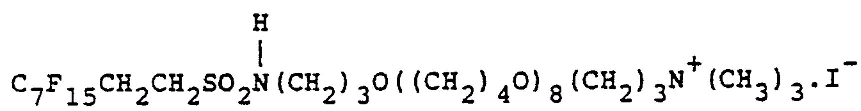

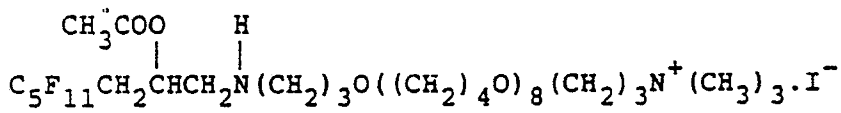

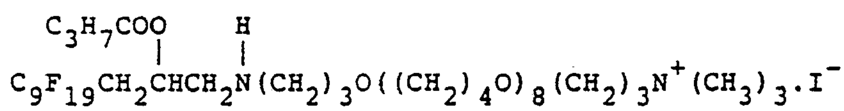

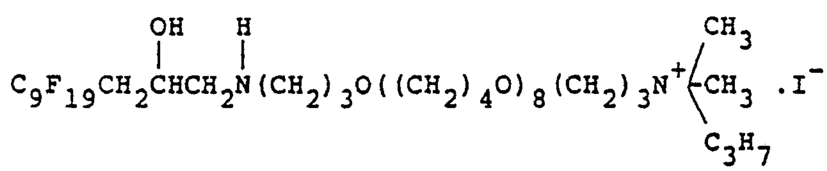

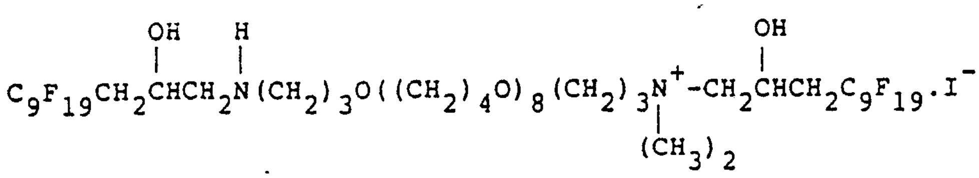

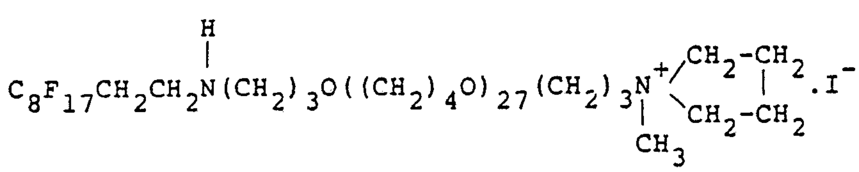

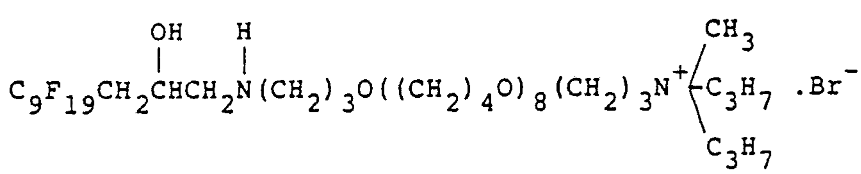

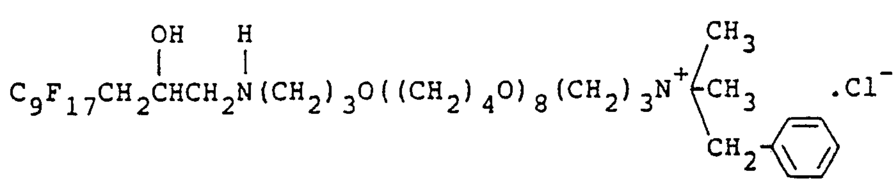

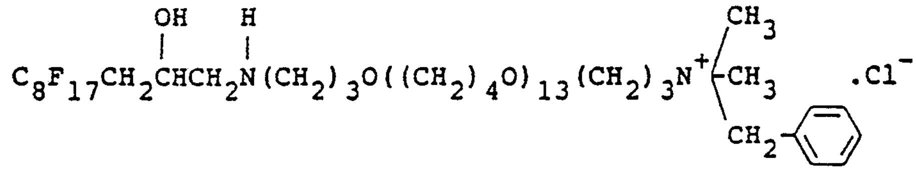

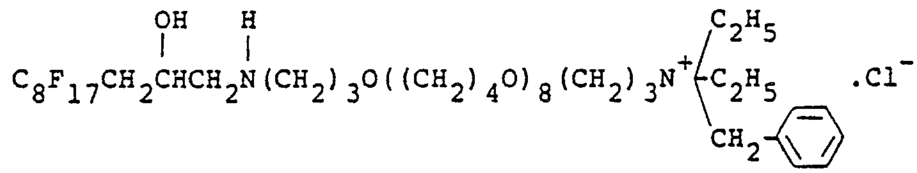

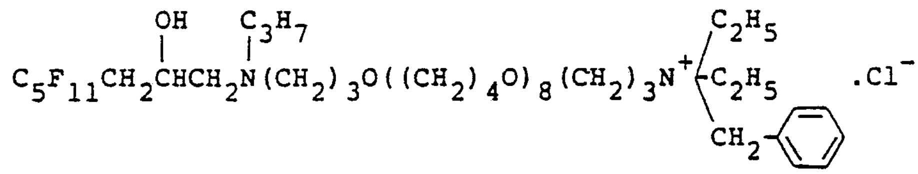

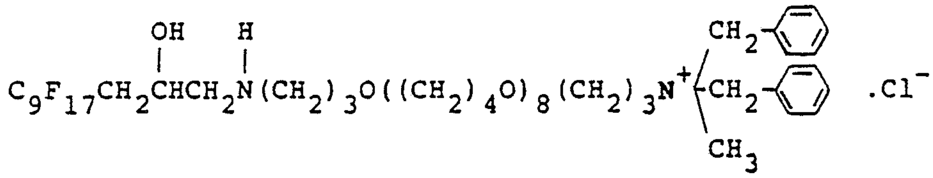

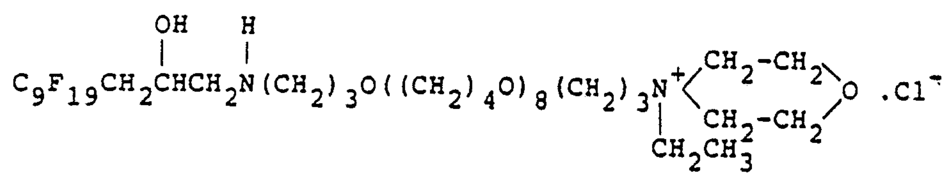

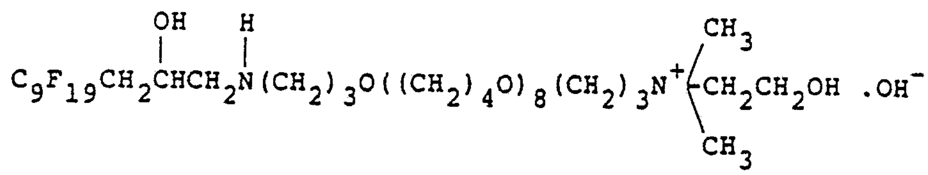

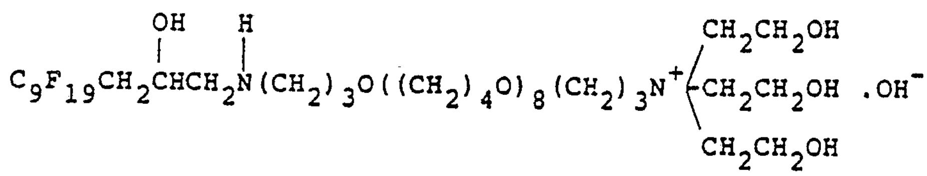

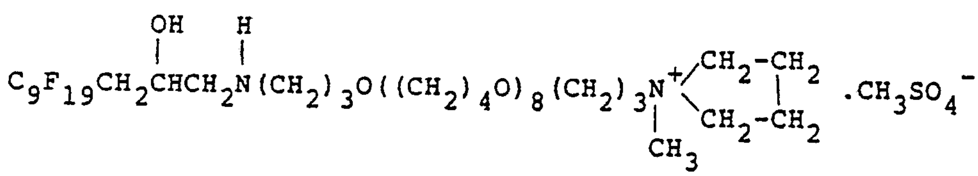

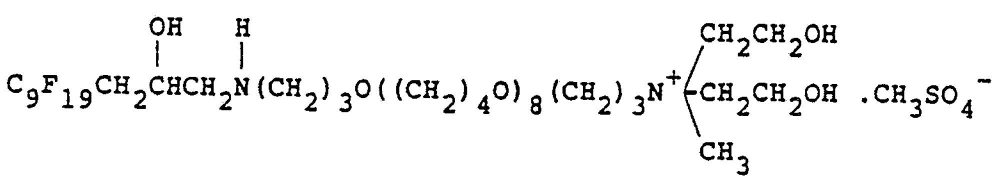

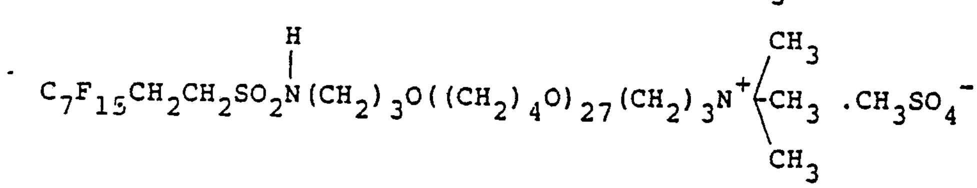

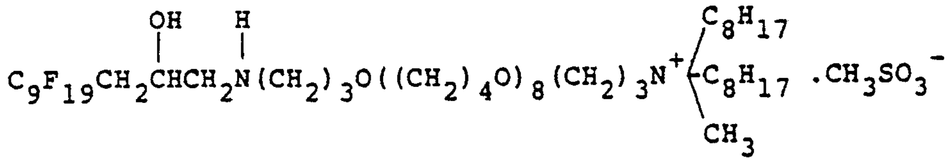

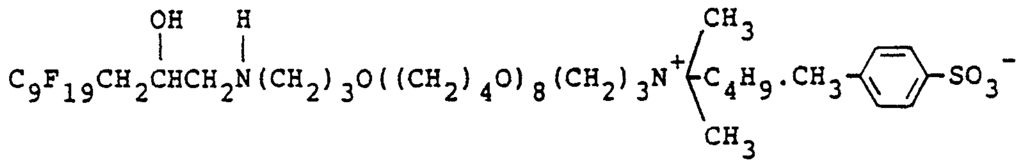

Specific examples of the compound (I) wherein $Y^2$ is

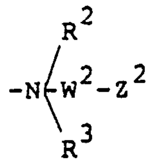

are as follows:

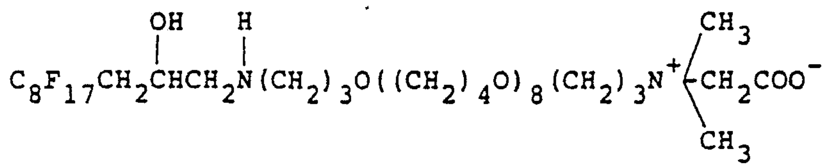

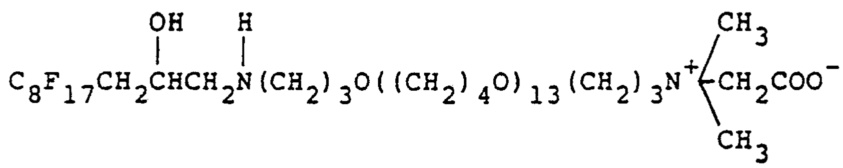

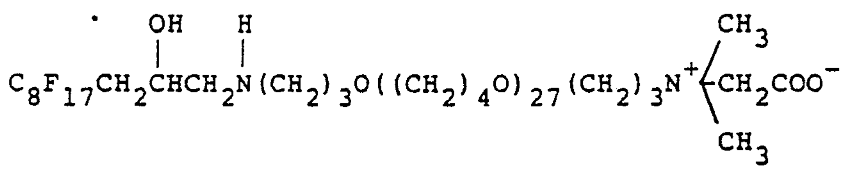

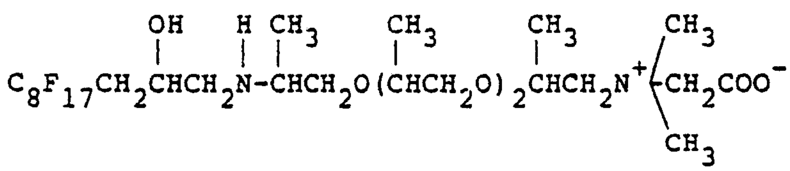

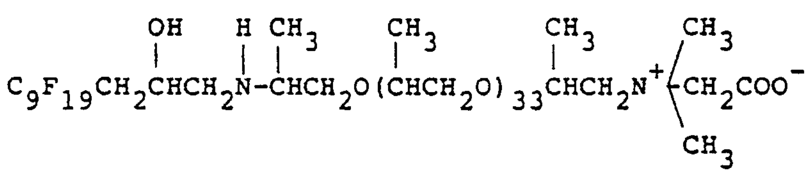

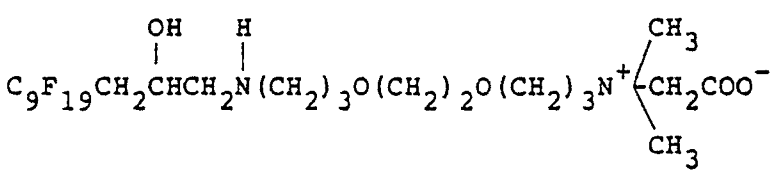

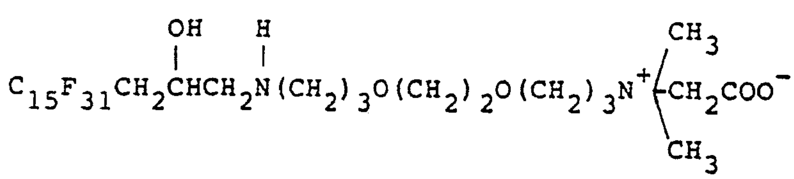

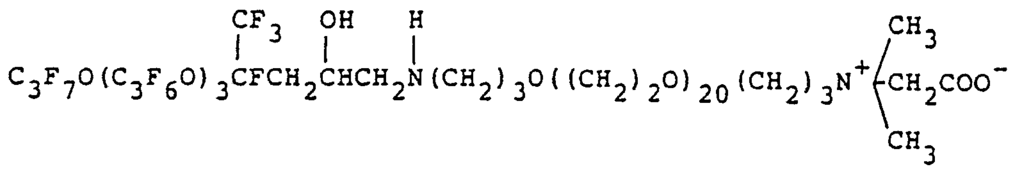

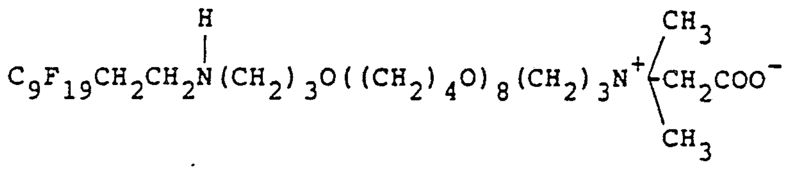

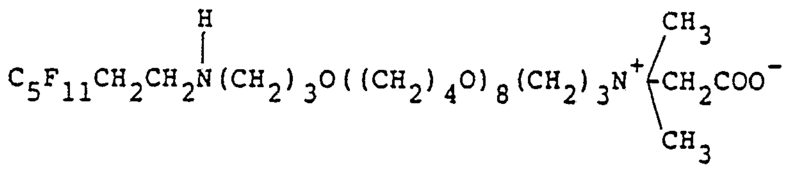

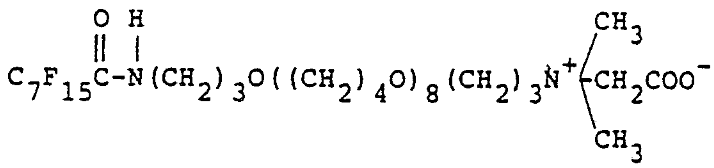

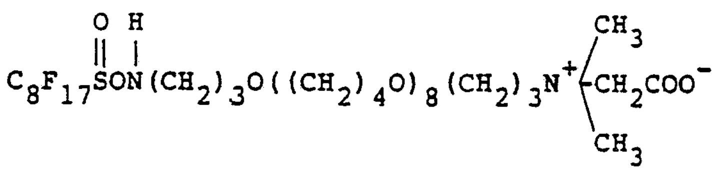

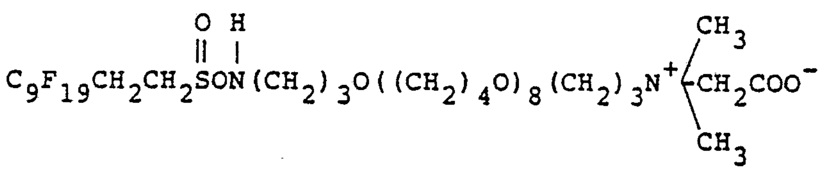

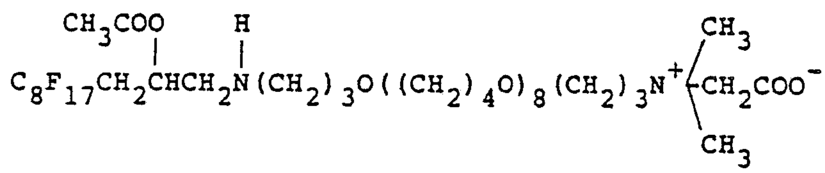

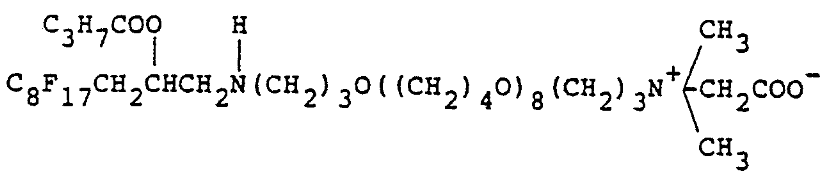

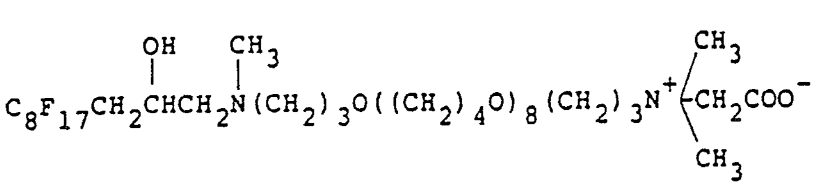

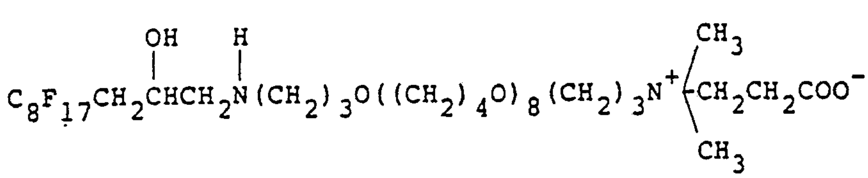

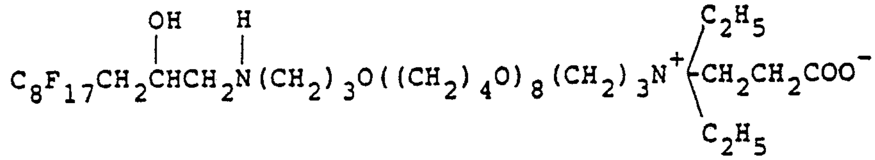

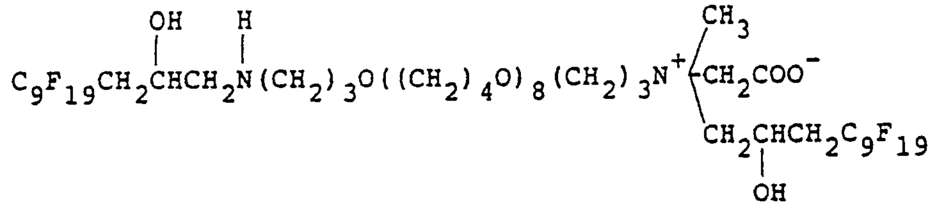

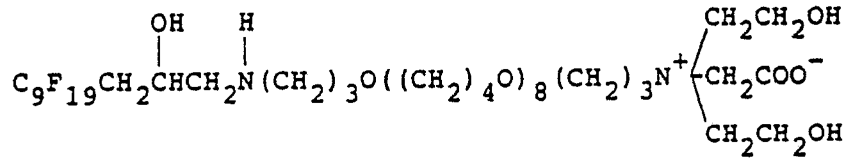

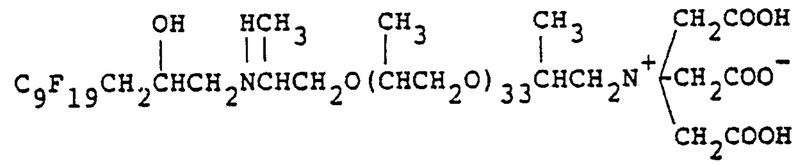

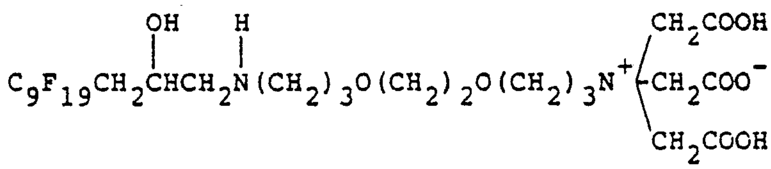

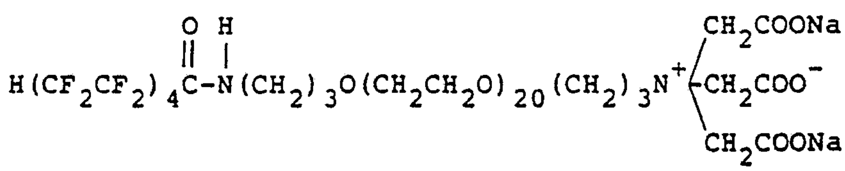

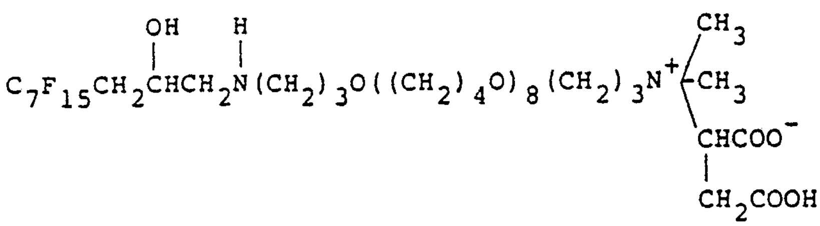

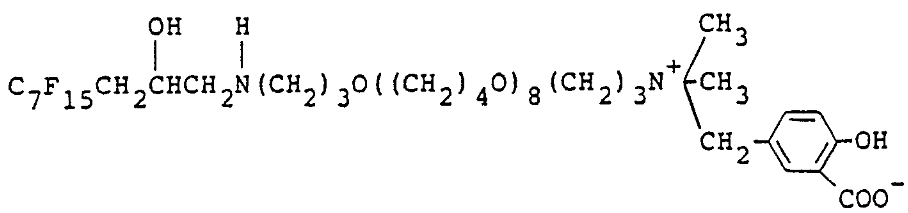

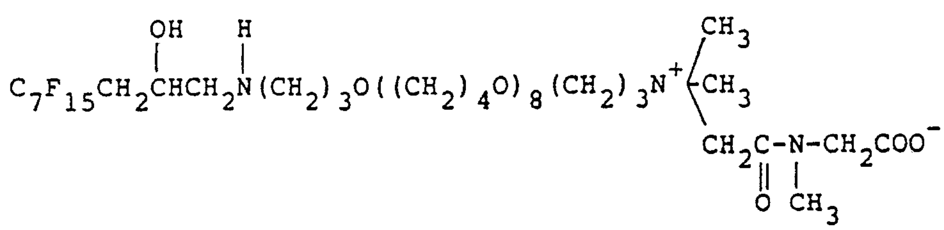

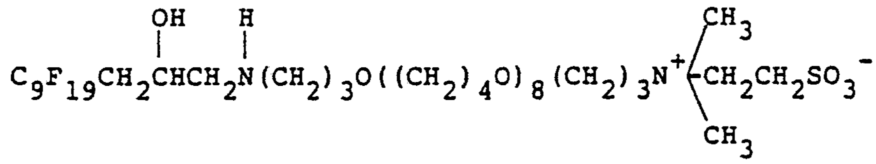

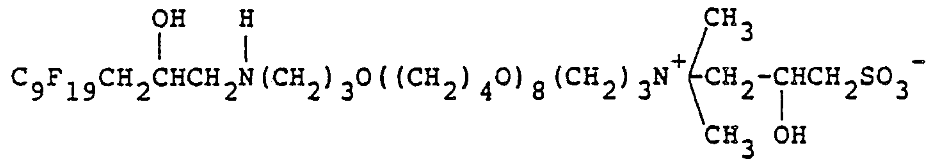

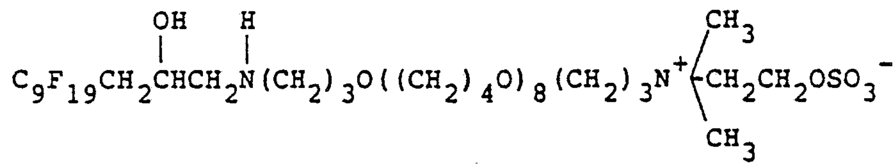

The fluorine-containing compound (I) of the invention can be prepared as follows:
(A) in the first step, a compound of the formula:

$$NHR^1X^2O(X^3O)_mX^4NH_2 \qquad (a1)$$

wherein $R^1$, $X^2$, $X^3$, $X^4$ and m are the same as defined above is reacted with a compound of the formula:

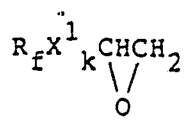

(a2)

wherein $R_f$, $X^1$ and k are the same as defined above,

$$R_fCOA \qquad (a3)$$

wherein $R_f$ is the same as defined above and A is an alkoxy group,

$$R_fX^1_kCOB \qquad (a4)$$

wherein $R_f$, $X^1$ and k are the same as defined above and B is halogen,

$$R_fX^1_kSO_2B \qquad (a5)$$

wherein $R_f$, $X^1$, B and k are the same as defined above, or

$$R_fX^1_k(CH_2)_nB \qquad (a6)$$

wherein $R_f$, $X^1$, B, k and n are the same as defined above, in equimolar amounts to obtain a compound of the formula:

$$R_fX^1_kY^1NR^1X^2O(X^3O)_mX^4NH_2 \qquad (a7)$$

wherein $R_f$, $X^1$ to $X^4$, $R^1$, k and m are the same as defined above and $Y^1$ is a group of the formula:

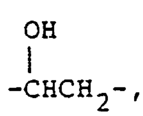, 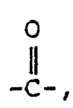, 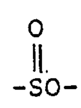 or $-(CH_2)_n-$

wherein n is the same as defined above.

(B—1) In the second step, for the preparation of the compound (I) wherein $Y^2$ is

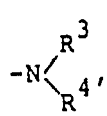,

the compound (a7) obtained in the step (A) is reacted with a compound of the formula:

$$B—R \qquad (b1)$$

wherein B is the same as defined above and R is a group of the formula:

$$-(X^1{}_kO)_q-H \text{ or } -R^7-Z^3$$

wherein $X^1$, $R^7$, $Z^3$, k and q are the same as defined above in a molar ratio of 1:1 to 1:2.

(B—2) For the preparation of the compound (I) wherein $Y^2$ is $-W^1-Z^1$, the compound (a7) is reacted with a compound of the formula:

$$B-R' \quad \text{(b2)}$$

wherein B is the same as defined above and R' is a $C_1-C_{20}$ hydrocarbon group, or a group of the formula:

$$-(X^1{}_kO)_q-H \text{ or } -R_f$$

wherein $R_f$, $X^1$, k and q are the same as defined above,

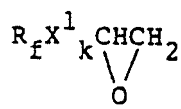

(a2)

wherein $R_f$, $X^1$ and k are the same as defined above, or

$$B-R^{11}-B \quad \text{(b3)}$$

wherein $R^{11}$ and B are the same as defined above to obtain a compound (I) wherein $Y^2$ is the group of the formula:

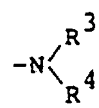 or 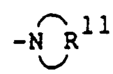

wherein $R^3$, $R^4$ and $R^{11}$ are the same as defined above.

(C—1) The compound (I) obtained in the step (B—2) is then reacted with the compound (b2) or a compound of the formula:

$$R^2-Q-R^{10} \quad \text{(c1)}$$

wherein $R^2$ and $R^{10}$ are the same as defined above and Q is $-SO_3-$, $-SO_4-$ or $-CO_3-$ to obtain the compound (I) wherein $Y^2$ is $-W^1-Z^1$.

(B—3) Further, for the preparation of the compound (I) wherein $Y^2$ is

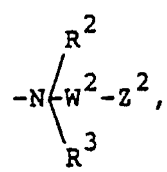,

the compound (a7) is reacted with the compound of the formula

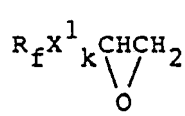

(a2)

wherein $R_f$, $X^1$ and k are the same as defined above, or a compound of the formula:

$$B-R'' \quad \text{(b4)}$$

wherein B is the same as defined above and R'' is a $C_1-C_{20}$ hydrocarbon group, a group of the formula:

$$-(X^1{}_kO)_q-H, -X^1COOM \text{ or } R_f$$

wherein $R_f$, $X^1$, k and q are the same as defined above to obtain the compound (I) wherein $Y^2$ is

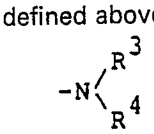 .

(C—2) Subsequently, the compound (I) obtained in the step (B—3) is reacted with a compound of the formula:

$$B—W^2—Z^2H \qquad (c2)$$

wherein B, $W^2$ and $Z^2$ are the same as defined above, or

$$CH_2{=}CHX^1{}_kCOOH \qquad (c3)$$

wherein $X^1$ and k is the same as defined above to obtain the compound (I) wherein $Y^2$ is

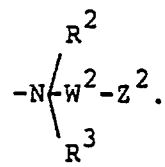

Reaction conditions in each steps are as follows:

In the step (A), the reactions of the compound (a1) with the compound (a2), (a3) or (a6) are preferably carried out in a solvent selected from the group consisting of alcohols, ethers, hydrocarbons, halogenated hydrocarbons, aromatic compounds, etc. The reaction temperature is from 20 to 150°C, preferably from 40 to 100°C. The reaction time is from 3 to 10 hours, preferably from 5 to 8 hours.

The reaction of the compound (a1) with the compounds (a4) or (a5) is carried out in a solvent selected from the group consisting of ethers, hydrocarbons, halogenated hydrocarbons, aromatic compounds, etc. The reaction temperature is from −10 to 100°C, preferably from 0 to 50°C. The reaction time is from 1 to 5 hours, preferably from 2 to 3 hours.

The compound obtained in the step (A) is used in the reaction in the step (B—1), (B—2) or (B—3) without isolation or purification. Thus, the compound (b1), (b2), (b3), (b4) or (a2) is added to the reaction mixture resulted in the step (A) in an equimolar or twice equimolar amount. The reaction temperature in this step is from 20 to 150°C, preferably from 40 to 100°C. The reaction time is from 3 to 10 hours, preferably from 5 to 8 hours.

The —CH(OH)— group born in the compound (a7) obtained in the step (A) may be converted to the —CH($OR^2$)— group by reacting the compound (a7) with a corresponding acid halide or anhydride at a room temperature.

The compound obtained in the step (B—2) and (B—3) is also used in the step (C—1) and (C—2) without isolation or purification, respectively. The reaction temperature in this step is from 20 to 150°C, preferably from 40 to 100°C. The reaction time is from 3 to 10 hours, preferably from 5 to 8 hours.

When the compounds to be reacted in the steps (B) and (C) are the same, the reactions in the both steps can be simultaneously carried out.

The compound (I) of the invention has far better solubility in solvents, particularly in water or organic solvents, and the solution of the compound (I) has better surface tension-lowering property than the above described conventional fluorine-containing compounds. Therefore, the compound (I) of the invention is preferably used as an leveling agent for various waxes and coatings, an additive for a fire extinguisher (e.g. an aqueous foam fire extinguisher, a synthetic surfactant fire extinguisher, a protein fire extinguisher and a powder fire extinguisher), a penetrating agent for a fiber, metal or photograph processing agent, an antistatic agent for a resin, a non-tackifier, a stainproofing agent, an anti-clouding and anti-fogging agent for polyvinyl film, a mold release agent, an emulsifier for an emulsion polymerization, etc.

The present invention will be hereinafter explained further in detail by following Examples.

## Example 1

Preparation of

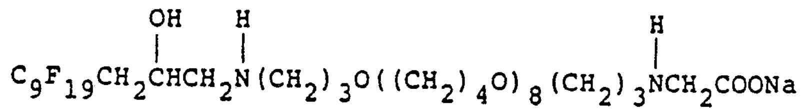

(a) To a four-necked 100 ml flask equipped with a thermometer, a condenser and a stirrer,

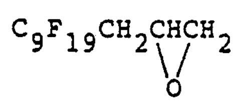

(5.26 g, 0.01 mole), $H_2N(CH_2)_3O((CH_2)_4O)_8(CH_2)_3NH_2$ (7.08 g, 0.01 mole) and isopropanol (15 g) were charged and reacted at 70°C for 6 hours. Gas chromatography analysis of the reaction mixture revealed that the epoxide raw material was consumed.

(b) To the reaction mixture obtained in the step (a), $ClCH_2COOH$ (0.95 g, 0.01 mole) and NaOH (0.80 g, 0.02 mole) were added and reacted at 70°C for 7 hours. Thereafter, isopropanol was distilled off, and the residue was washed with a mixture of acetonitrile and trichlorotrifluoroethane in a weight ratio of 50:50 to obtain a solid compound (12.22 g). Yield 93%.

The compound was analyzed by NMR and IR spectrum and identified as the title compound. The results of the analyses are shown below.

$^{19}F$-NMR (External standard: $CF_3COOH$)

| Chemical shift δ (ppm) | Signal strength |
|---|---|
| -5.7 | 6F |
| 34.6 | 2F |
| 37.1 | 2F |
| 42.8 | 2F |
| 43.7 | 4F |
| 45.6 | 2F |
| 108.2 | 1F |

$^{1}H$-NMR

| Chemical shift δ (ppm) | Assignment | Signal strength |
|---|---|---|
| 1.50-1.80 | $-OCH_2C\underline{H}_2C\underline{H}_2CH_2O-$<br>$-NHCH_2C\underline{H}_2CH_2O-$ | 32H<br>4H |
| 2.27 | OH<br>$-CF_2C\underline{H}_2CH-$ | 2H |
| 2.58-2.90 | OH<br>$-CHC\underline{H}_2N=$<br>$=NC\underline{H}_2CH_2-$ | 2H<br><br>4H |
| 3.30-3.61 | $-OC\underline{H}_2CH_2CH_2C\underline{H}_2O-$<br>$=NCH_2CH_2C\underline{H}_2O-$<br>$-NC\underline{H}_2COONa$ | 32H<br>4H<br>2H |
| 4.18 | OH<br>$-C\underline{H}-$ | 1H |
| 4.45-4.72 | $=N-\underline{H}$ | 2H |
| 4.83 | $C-O\underline{H}$ | 1H |

IR spectrum: 1,610 $cm^{-1}$ (C=O)

Example 2

Preparation of

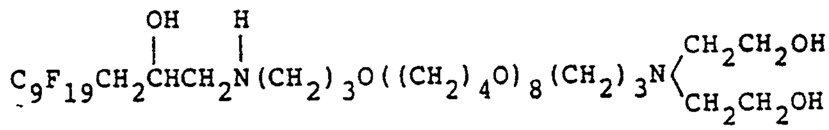

To the reaction mixture obtained in the same manner as Example 1, (a), $ClCH_2CH_2OH$ (1.61 g, 0.02 mole) and NaOH (0.80 g, 0.02 mole) were added and reacted at 70°C for 7 hours. Thereafter, isopropanol was distilled off, and the residue was washed with the same solvent mixture as used in Example 1 to obtain the title compound (12.03 g). Yield 91%.

$^{19}F$-NMR (External standard: $CF_3COOH$)

| Chemical shift δ (ppm) | Signal strength |
|---|---|
| -5.6 | 6F |
| 34.6 | 2F |
| 37.2 | 2F |
| 42.8 | 2F |
| 43.7 | 4F |
| 45.6 | 2F |
| 108.1 | 1F |

$^{1}$H-NMR

| Chemical shift δ (ppm) | Assignment | Signal strength |
|---|---|---|
| 1.50-1.80 | $-OCH_2C\underline{H}_2C\underline{H}_2CH_2O-$<br>$-NHCH_2C\underline{H}_2CH_2O-$ | 32H<br>4H |
| 2.28 | 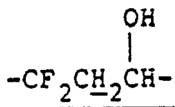 | 2H |
| 2.58-2.92 | 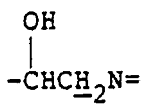<br>$=NC\underline{H}_2CH_2-$<br>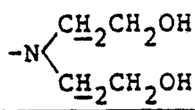 | 2H<br>4H<br>4H |
| 3.29-3.60 | $-OC\underline{H}_2CH_2CH_2C\underline{H}_2O-$<br>$=NCH_2CH_2C\underline{H}_2O-$<br>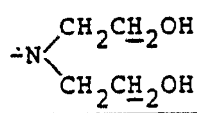 | 32H<br>4H<br>4H |
| 4.10 | $-NCH_2CH_2O\underline{H}$ | 2H |
| 4.17 | 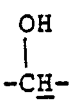 | 1H |
| 4.65 | $=N\underline{H}$ | 1H |
| 4.83 | $C-O\underline{H}$ | 1H |

Example 3

Preparation of

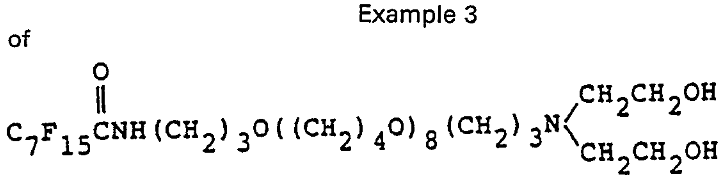

(a) To the same flask as used in Example 1, $C_7F_{15}COOC_2H_5$ (4.42 g, 0.01 mole), $H_2N(CH_2)_3O((CH_2)_4O)_8(CH_2)_3NH_2$ (7.08 g, 0.01 mole) and isopropanol (15 g) were charged and reacted at 70°C for 6 hours. Gas chromatography analysis of the reaction mixture revealed that the epoxide raw material was consumed.

(b) To the reaction mixture obtained in the step (a), $ClCH_2CH_2OH$ (1.61 g, 0.02 mole) and NaOH (0.80 g, 0.02 mole) were added and reacted in the same manner as in Example 2 (b) to obtain the title compound (10.7 g). Yield 90%.

| Elemental analysis: | C | H | F | N | O |
|---|---|---|---|---|---|
| Calc'd: | 50.51 | 7.32 | 23.99 | 2.02 | 16.16 |
| Found: | 50.47 | 7.30 | 24.05 | 2.00 | 16.18 |

IR spectrum: 1,720 $cm^{-1}$ (—CO—NH—).

Example 4

Preparation of

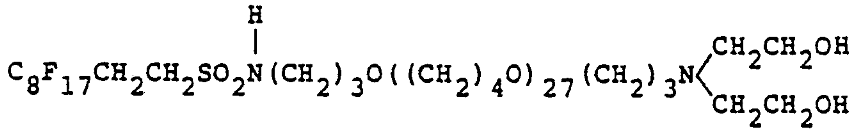

(a) To the same flask as used in Example 1, $C_8F_{17}CH_2CH_2SO_2Cl$ (5.47 g, 0.01 mole), $H_2N(CH_2)_3O((CH_2)_4O)_{27}(CH_2)_3NH_2$ (20.8 g, 0.01 mole) and trichlorotrifluoroethane (20 g) were charged and reacted at 0°C for 30 minutes and then at a room temperature for 2 hours.

(b) To the reaction mixture obtained in the step (a), $ClCH_2CH_2OH$ (1.61 g, 0.02 mole) and NaOH (0.80 g, 0.02 mole) were added and reacted in the same manner as in Example 2 (b) to obtain the title compound (24.6 g). Yield 92%.

| Elemental analysis: | C | H | F | N | O | S |
|---|---|---|---|---|---|---|
| Calc'd: | 57.44 | 9.09 | 12.08 | 1.05 | 19.15 | 1.20 |
| Found: | 57.40 | 9.08 | 12.09 | 1.04 | 19.21 | 1.18 |

IR spectrum: 1,170 $cm^{-1}$ ($—CH_2SO_2N=$).

Example 5

Preparation of

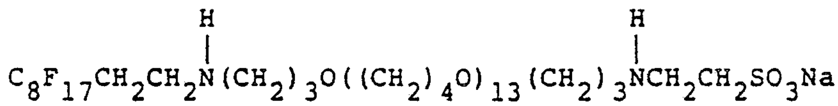

(a) To the same flask as used in Example 1, $C_8F_{17}CH_2CH_2I$ (5.74 g, 0.01 mole), $H_2N(CH_2)_3O((CH_2)_4O)_{13}(CH_2)_3NH_2$ (10.7 g, 0.01 mole) and isopropanol (15 g) were charged and reacted at 70°C for 6 hours. Gas chromatography analysis revealed that the iodide compound was consumed.

(b) To the reaction mixture obtained in the step (a), $ClCH_2CH_2SO_3Na$ (1.67 g, 0.01 mole) and NaOH (0.40 g, 0.01 mole) were added and reacted in the same manner as in Example 2 (b) to obtain the title compound (14.6 g). Yield 89%.

| Elemental analysis: | C | H | F | N | O | S | Na |
|---|---|---|---|---|---|---|---|
| Calc'd: | 51.09 | 7.66 | 19.65 | 1.70 | 16.55 | 1.95 | 1.40 |
| Found: | 51.05 | 7.68 | 19.68 | 1.70 | 16.54 | 1.94 | 1.41 |

Example 6

Preparation of

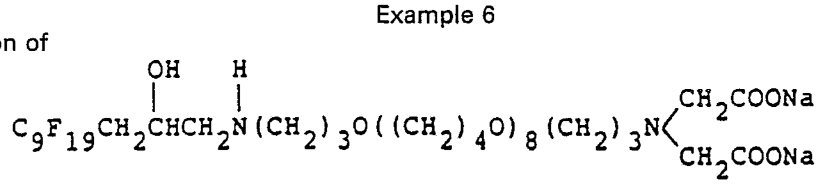

To the reaction mixture obtained in the same manner as in Example 1 (a), $ClCH_2COOH$ (1.9 g, 0.02 mole) and NaOH (1.6 g, 0.04 mole) were added and reacted in the same manner as in Example 1 (b) to obtain the title compound (12.5 g). Yield 90%.

| Elemental analysis: | C | H | F | N | O | Na |
|---|---|---|---|---|---|---|
| Calc'd: | 46.48 | 6.24 | 25.90 | 2.01 | 16.07 | 3.30 |
| Found: | 46.45 | 6.27 | 25.92 | 2.00 | 16.01 | 3.35 |

Text Examples and Comparative Examples

Solubility of the following compounds of the invention and comparative compounds in some organic solvents, and their surface tension of a 0.1% by weight solution in toluene were measured at 25°C. The surface tension was measured by the Wilhelmy method.

Compounds of the invention

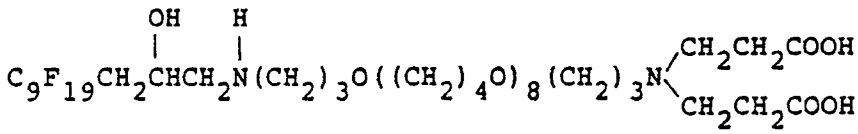

(i)

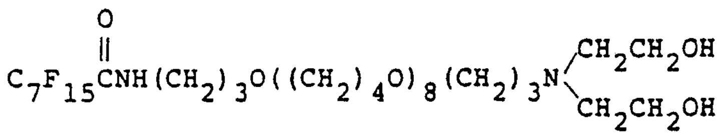

(ii)

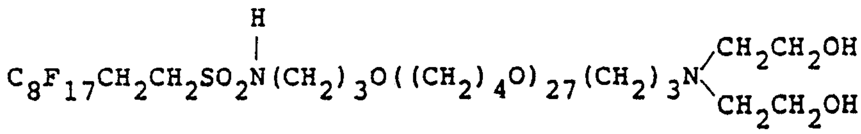

(iii)

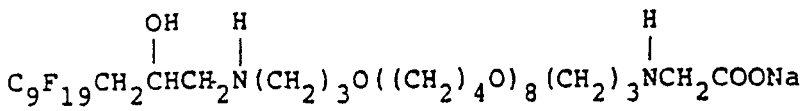

(iv)

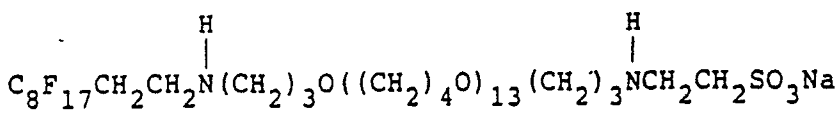

(v)

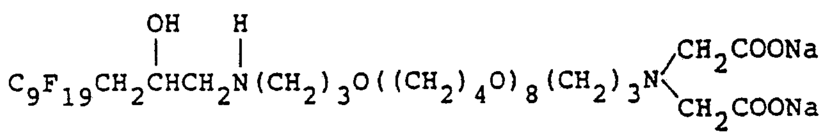

(vi)

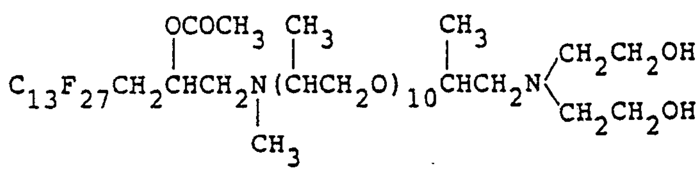

(vii)

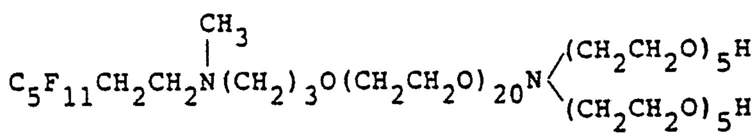

(viii)

Comparative compounds

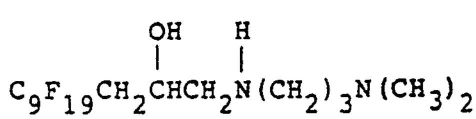

(ix)

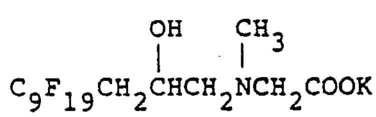

(x)

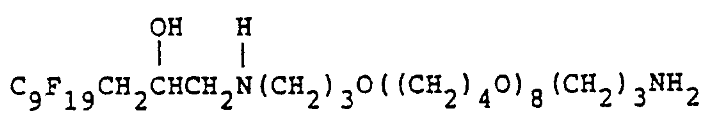

(xi)

FC-430 (xii)

(Fluorine-containing surfactant manufactured by 3M)

Table 1

| Compound | Methanol | Toluene | | Hexane |
|---|---|---|---|---|
| | 1 wt % | 0.1 wt% | 1 wt % | 0.1 wt % |
| i | O | O | O | O |
| ii | O | O | O | O |
| iii | O | O | O | O |
| iv | O | O | △ | X |
| v | O | O | △ | X |
| vi | O | O | X | X |
| vii | O | O | O | △ |
| viii | O | O | O | △ |
| ix | O | △ | X | X |
| x | X | X | X | X |
| xi | O | O | △ | X |

Note: O, △ and X denote "Soluble", "Slightly opaque or dispersed" and "Insoluble", respectively.

Table 2

| Compound | Surface tension[1)] (dyn/cm) |
|---|---|
| (Toluene) | (28.5) |
| i | 20.2 |
| ii | 21.4 |
| iii | 20.5 |
| iv | 21.5 |
| v | 20.8 |
| vi | 19.8 |
| vii | 19.9 |
| viii | 22.0 |
| ix | 25.2 |
| xi | 25.0 |
| xii | 26.5 |

Note: 1) Surface tension of 0.1 wt % solution in toluene.

Compound (x) was not dissolved in toluene.

Example 7

Preparation of

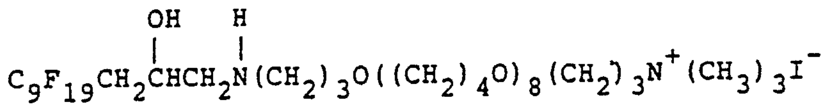

To the reaction mixture prepared in the same manner as in Example 1(a), $CH_3I$ (4.97 g, 0.035 mole) was added and reacted at 70°C for 7 hours. Thereafter, unreacted $CH_3I$ and isopropanol were distilled off, and the residue was washed with ether to obtain the title compound (12.63 g). Yield 90%.

| Elemental analysis: | C | H | N | O | I | F |
|---|---|---|---|---|---|---|
| Calc'd: | 45.30 | 6.55 | 1.99 | 11.40 | 9.05 | 25.71 |
| Found: | 45.28 | 6.55 | 2.02 | 11.41 | 9.01 | 25.73 |

Bromophenol Blue test

To 10 ml of a 1 wt% aqueous solution of the thus prepared compound, there added a few drops of a mixture of 0.2N aqueous solution of sodium acetate (75 ml), 0.2N aqueous solution of acetic acid (925 ml) and 96% ethanol containing 0.1% by weight of Bromophenol Blue (20 ml). The aqueous solution turned blue, which indicated the presence of an cationic surfactant.

Example 8

Preparation of

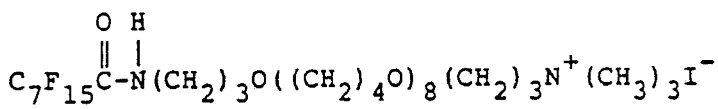

(a) To the same flask as used in Example 1(b), $C_7F_{15}COOC_2H_5$ (4.42 g, 0.01 mole), $H_2N(CH_2)_3O((CH_2)_4O)_8(CH_2)_3NH_2$ (7.08 g, 0.01 mole) and isopropanol (15 g) were charged and reacted. Gas chromatography analysis revealed that the ester was consumed.

(b) and (c) To the reaction mixture prepared in the step (a), $CH_3I$ (4.97 g, 0.035 mole) was added and reacted at 80°C for 7 hours. Thereafter, unreacted $CH_3I$ and isopropanol were distilled off, and the residue was washed with ether to obtain the title compound (11.46 g). Yield 90%.

$^{19}$F-NMR (External standard: $CF_3COOH$)

| Chemical shift δ (ppm) | Signal strength |
|---|---|
| 3.4 | 3F |
| 41.6 | 2F |
| 44.0 | 4F |
| 44.8 | 4F |
| 48.3 | 2F |

IR spectrum: 1,720 $cm^{-1}$ (—CO—NH—).

The result of the Bromophenol Blue test was identical to that of Example 7.

Example 9

Preparation of

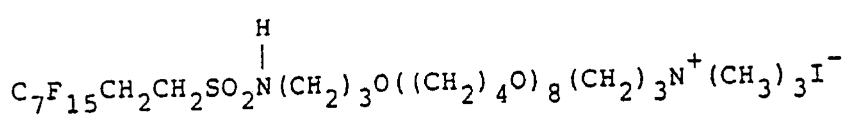

(a) To the same flask as used in Example 1(a), $C_7F_{15}CH_2CH_2SO_2Cl$ (4.97 g, 0.01 mole), $H_2N(CH_2)_3O((CH_2)_4O)_8(CH_2)_3NH_2$ (7.08 g, 0.01 mole) and trichlorotrifluoroethane (20 g) were charged and reacted at 0°C for 30 minutes and then at a room temperature for 2 hours.

(b) and (c) To the reaction mixture prepared in the step (a), $CH_3I$ (4.97 g, 0.035 mole) and isopropanol (15 g) were added and reacted at 80°C for 7 hours. Thereafter, unreacted $CH_3I$, isopropanol and trichlorotrifluoroethane were distilled off, and the residue was washed with ether to obtain the title compound (12.31 g). Yield 92%.

| Elemental analysis: | C | H | N | O | S | I | F |
|---|---|---|---|---|---|---|---|
| Calc'd: | 44.84 | 6.73 | 2.09 | 13.15 | 2.39 | 9.49 | 21.30 |
| Found: | 44.82 | 6.73 | 2.06 | 13.18 | 2.43 | 9.47 | 21.31 |

The result of the Bromophenol Blue test was identical to that of Example 7.

Example 10

Preparation of

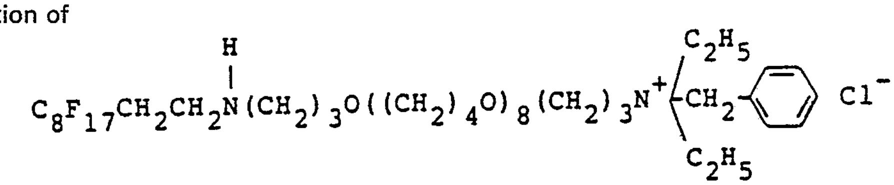

(a) To the same flask as used in Example 1(a), $C_8F_{17}CH_2CH_2I$ (5.74 g, 0.01 mole), $H_2N(CH_2)_3O((CH_2)_4O)_8(CH_2)_3NH_2$ (7.08 g, 0.01 mole) and isopropanol (15 g) were charged and reacted at 70°C for 6 hours. Gas chromatography analysis revealed that the iodide compound was consumed.

(b) To the reaction mixture prepared in the step (a), $C_2H_5Br$ (2.18 g, 0.02 mole) was added and reacted at 70°C for 5 hours. Gas chromatography analysis revealed that $C_2H_5Br$ was consumed.

(c) To the reaction mixture prepared in the step (a),

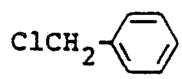

(1.27 g, 0.01 mole) was added and reacted at 70°C for 5 hours. Gas chromatography analysis revealed that

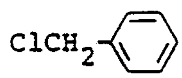

was consumed. Thereafter, isopropanol was distilled off, and the residue was washed with ether to obtain the title compound (12.03 g). Yield 90%.

| Elemental analysis: | C | H | N | O | Cl | F |
|---|---|---|---|---|---|---|
| Calc'd: | 52.97 | 7.33 | 2.10 | 10.77 | 2.66 | 24.15 |
| Found: | 53.01 | 7.35 | 2.10 | 10.77 | 2.62 | 24.15 |

The result of the Bromophenol Blue test was identical to that of Example 7.

Example 11

Preparation of

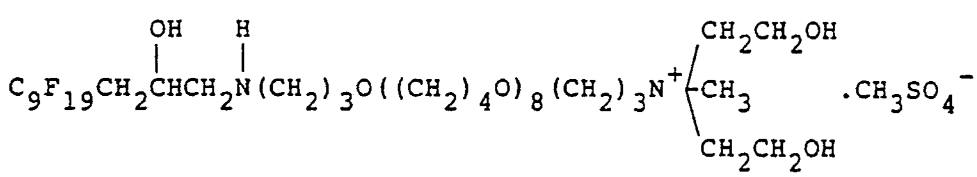

(a) The same procedure as in Example 1(a) was repeated.

(b) To the reaction mixture prepared in the step (a), $ClCH_2CH_2OH$ (1.61 g, 0.02 mole) was added and reacted at 70°C for 6 hours. Gas chromatography analysis revealed that $ClCH_2CH_2OH$ was consumed.

(c) To the reaction mixture prepared in the step (b), $SO_4(CH_3)_2$ (1.39 g, 0.011 mole) was added and reacted at 60°C for 2 hours. Thereafter, isopropanol was distilled off, and the residue was washed with ether to obtain the title compound (13.03 g). Yield 90%.

| Elemental analysis: | C | H | N | O | S | F |
|---|---|---|---|---|---|---|
| Calc'd: | 46.41 | 6.84 | 1.93 | 17.68 | 2.21 | 24.93 |
| Found: | 46.39 | 6.80 | 1.97 | 17.76 | 2.18 | 24.90 |

The result of the Bromophenol Blue test was identical to that of Example 7.

Test Examples and Comparative Examples

Solubility of the following compounds of the invention and comparative compounds in some organic solvents, and their surface tension of a 0.1% by weight solution in toluene were measured at 25°C. The surface tension was measured by the Wilhelmy method.

Compounds of the invention

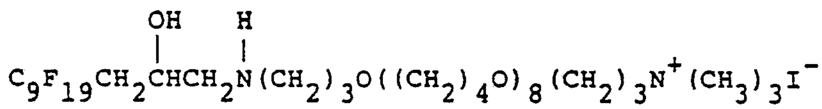
(i)

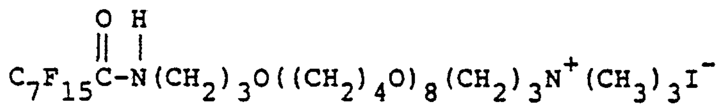
(ii)

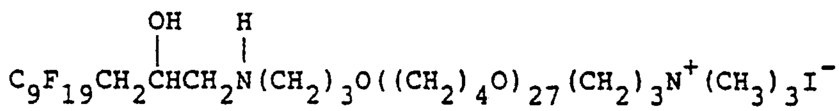
(iii)

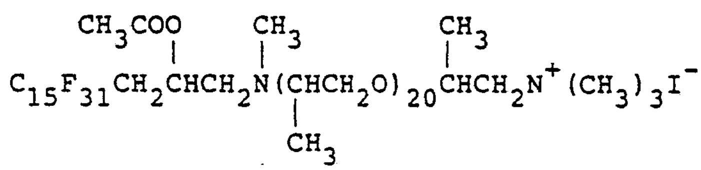
(iv)

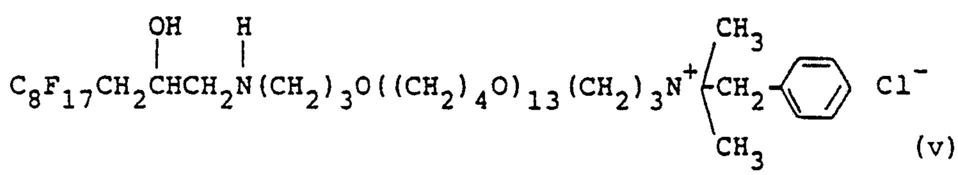
(v)

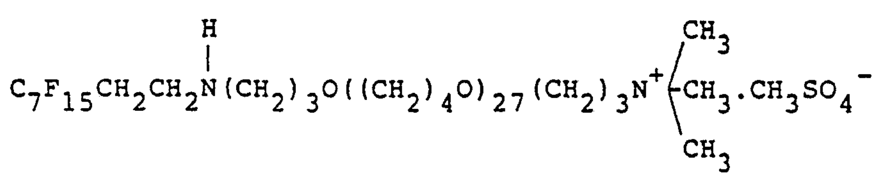
(vi)

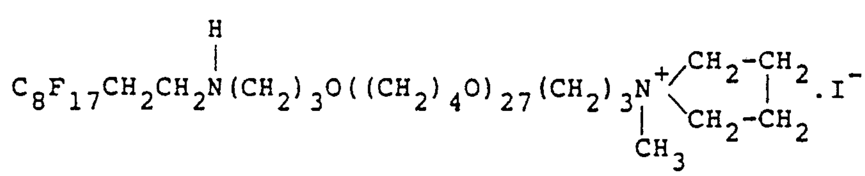
(vii)

Comparative compounds

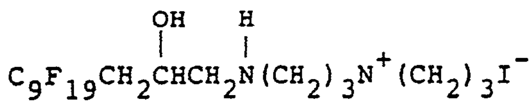

(viii)

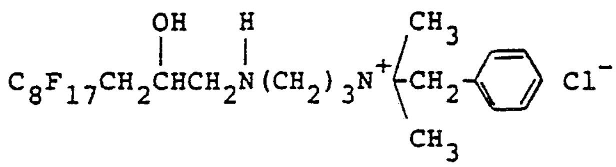

(ix)

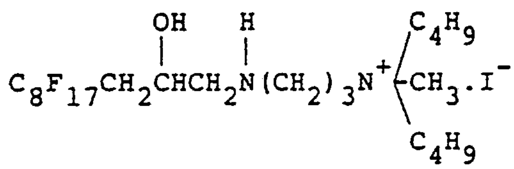

(x)

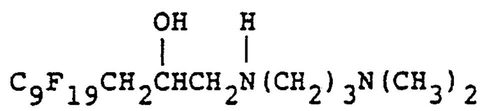

(xi)

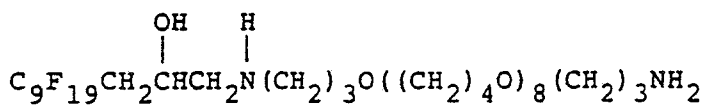

(xii)

FC-430 (xiii)

Table 3

| Compound | Methyl ethyl ketone | Ethyl acetate | Dimethyl formamide | Toluene |
|---|---|---|---|---|
| i | O | O | O | O |
| ii | O | O | O | O |
| iii | O | Δ | O | O |
| iv | O | O | O | X |
| v | O | O | O | O |
| vi | O | O | O | O |
| vii | O | O | O | O |
| viii | X | X | X | X |
| ix | X | X | O | X |
| x | O | X | X | X |
| xi | X | X | X | X |
| xii | O | O | O | X |

Note: O, Δ and X denote "Soluble", "Slightly opaque or dispersed" and "Insoluble", respectively.

Table 4

| Compound | Surface tension[1) (dyn/cm) |
|---|---|
| (Toluene) | (28.5) |
| i | 18.5 |
| ii | 22.8 |
| iii | 18.2 |
| iv | 16.4 |
| v | 19.0 |
| vi | 19.2 |
| vii | 18.9 |
| xi | 25.2 |
| xii | 25.0 |
| xiii | 26.7 |

Note: 1) Surface tension of 0.1 wt % solution in toluene.

Compounds (viii) to (x) were not dissolved in toluene.

Example 12

Preparation of

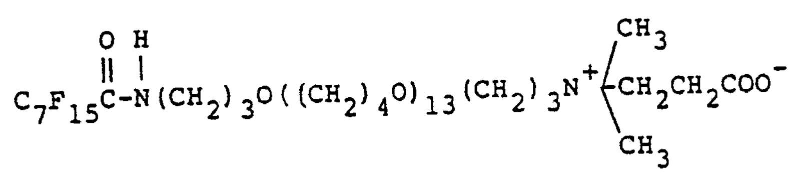

(a) To the same flask as used in Example 1, $C_7F_{15}COOC_2H_5$ (4.42 g, 0.01 mole), $H_2N(CH_2)_3O((CH_2)_4O)_{13}(CH_2)_3NH_2$ (10.68 g, 0.01 mole) and isopropanol (15 g) were charged and reacted to 70°C for 7 hours. Gas chromatography analysis of the reaction mixture revealed that the ester was consumed.

(b) To the reaction mixture prepared in the step (a), $CH_3I$ (12.84 g, 0.02 mole) was added and reacted at 70°C for 5 hours.

(c) To the reaction mixture prepared in the step (b), $CH_2{=}CHCOOH$ (0.86 g, 0.012 mole) was added and reacted at 70°C for 7 hours. Thereafter, isopropanol was distilled off, and the residue was washed with a mixture of acetonitrile and trichlorotrifluoroethane in a weight ratio of 1:1 to obtain the title compound (14.08 g). Yield 90%.

| Elemental analysis: | C | H | N | O | F |
|---|---|---|---|---|---|
| Calc'd: | 54.48 | 8.12 | 1.79 | 17.39 | 18.22 |
| Found: | 54.35 | 8.15 | 1.80 | 17.50 | 18.20 |

IR spectrum: 1,600 ($-CH_2COO^-$) and 1,720 $cm^{-1}$ ($-CO-NH-$).

Example 13

Preparation of

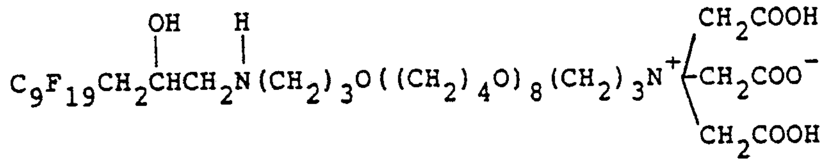

(a) To the same flask as used in Example 1(a),

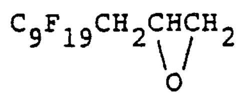

(5.26 g, 0.01 mole), $H_2N(CH_2)_3O((CH_2)_4O)_8(CH_2)_3NH_2$ (7.08 g, 0.01 mole) and isopropanol (15 g) were charged and reacted to 70°C for 6 hours. Gas chromatography analysis of the reaction mixture revealed that the epoxide was consumed.

(b) and (c) To the reaction mixture prepared in the step (a), $ClCH_2COOH$ (2.84 g, 0.03 mole) was added and reacted at 70°C for 7 hours. Thereafter, isopropanol was distilled off, and the residue was washed with the same solvent mixture as used in Example 12 to obtain the title compound (13.37 g). Yield 95%.

| Elemental analysis: | C | H | N | O | F |
|---|---|---|---|---|---|
| Calc'd: | 47.73 | 6.46 | 1.99 | 18.18 | 25.64 |
| Found: | 47.70 | 6.32 | 2.01 | 18.30 | 25.67 |

IR spectrum: 1,600 ($-CH_2COO^-$) and 1,755 $cm^{-1}$ ($-CH_2COOH$).

Example 14

Preparation of

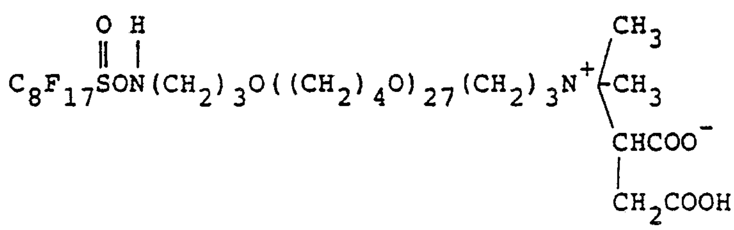

(a) To the same flask as used in Example 1(a), $C_8F_{17}SO_2Cl$ (5.19 g, 0.01 mole), $H_2N(CH_2)_3O((CH_2)_4O)_{27}(CH_2)_3NH_2$ (20.76 g, 0.01 mole) and trichlorotrifluoroethane (20 g) were charged and reacted at 0°C for 30 minutes and then at a room temperature for 2 hours.

(b) To the reaction mixture prepared in the step (a), $CH_3I$ (2.84 g, 0.02 mole) and isopropanol (15 g) were added and reacted at 70°C for 6 hours.

(c) To the reaction mixture prepared in the step (b),

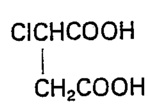

(1.53 g, 0.01 mole) was added and reacted at 70°C for 6 hours. Thereafter, isopropanol and trichlorotrifluoroethane were distilled off, and the residue was washed with the same solvent mixture as used in Example 12 to obtain the title compound (24.05 g). Yield 89%.

| Elemental analysis: | C | H | N | O | S | F |
|---|---|---|---|---|---|---|
| Calc'd: | 56.85 | 8.85 | 1.04 | 20.13 | 1.18 | 11.95 |
| Found: | 56.71 | 8.95 | 1.03 | 20.11 | 1.22 | 11.98 |

IR spectrum: 1,600 ($-COO^-$) and 1,755 $cm^{-1}$ ($-COOH$).

Example 15

Preparation of

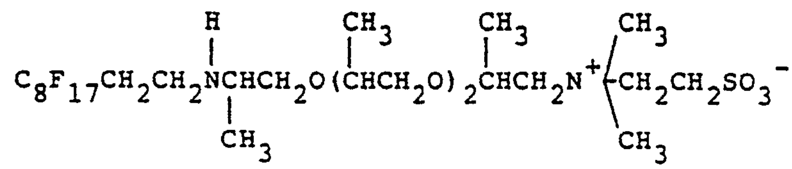

(a) To the same flask as used in Example 1(a), $C_8F_{17}CH_2CH_2I$ (5.74 g, 0.01 mole),

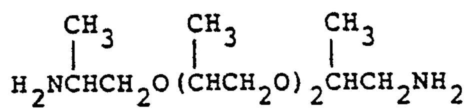

(2.48 g, 0.01 mole) and isopropanol (15 g) were charged and reacted at 70°C for 6 hours. Gas chromatography analysis of the reaction mixture revealed that the iodide compound was consumed.

(b) To the reaction mixture prepared in the step (a), $CH_3I$ (2.84 g, 0.02 mole) was added and reacted at 70°C for 5 hours. Gas chromatography analysis of the reaction mixture revealed that $CH_3I$ was consumed.

(c) To the reaction mixture prepared in the step (b), $BrCH_2CH_2SO_3H$ (1.89 g, 0.01 mole) was added and reacted at 70°C for 5 hours. Thereafter, isopropanol was distilled off, and the residue was washed with the same solvent mixture as used in Example 12 to obtain the title compound (7.47 g). Yield 90%.

| Elemental analysis: | C | H | N | O | S | F |
|---|---|---|---|---|---|---|
| Calc'd: | 37.59 | 4.70 | 3.37 | 11.57 | 3.86 | 38.92 |
| Found: | 37.61 | 4.59 | 3.35 | 11.70 | 3.86 | 38.90 |

Test Examples and Comparative Examples

Solubility of the following compounds of the invention and comparative compounds in some organic solvents, and their surface tension of a 0.1% by weight solution in toluene were measured at 25°C. The surface tension was measured by the Wilhelmy method.

<u>Compounds of the invention</u>

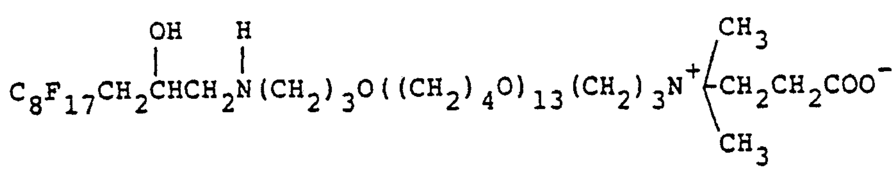
(i)

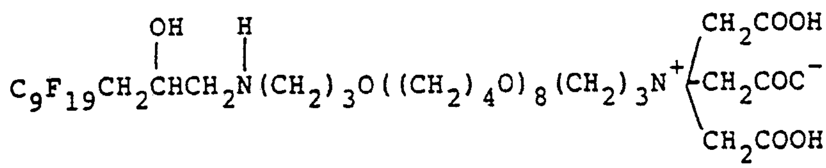
(ii)

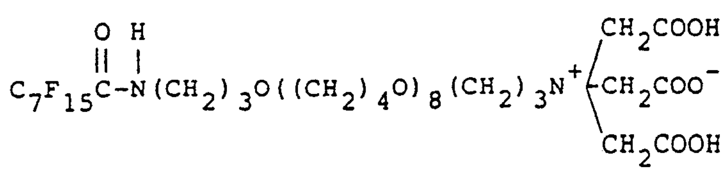
(iii)

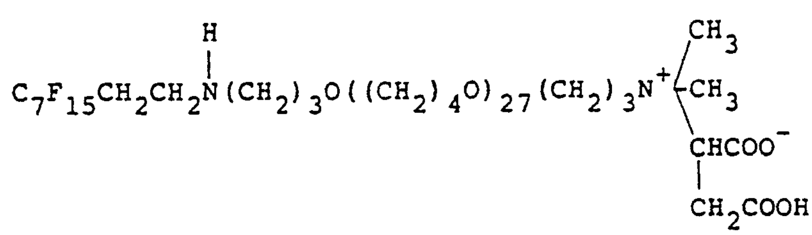
(iv)

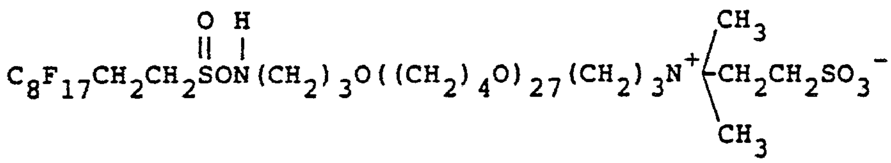 (v)

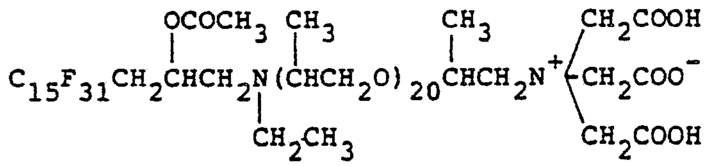 (vi)

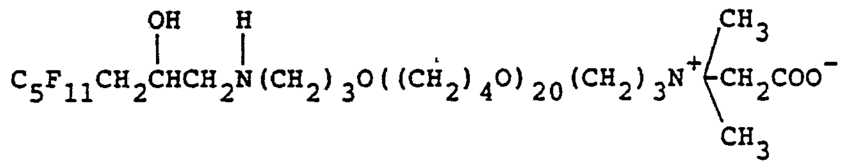 (vii)

Comparative fluorine-containing betaine compounds

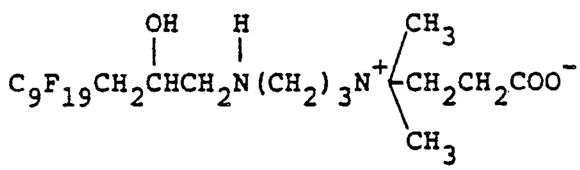 (viii)

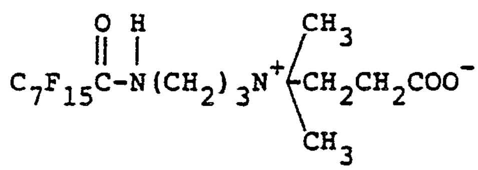 (ix)

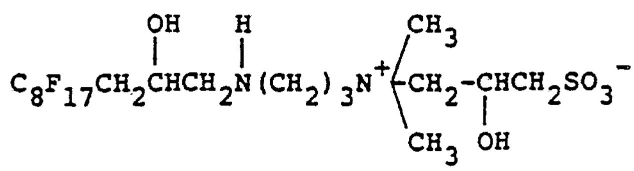 (x)

Comparative fluorine-containing surfactant

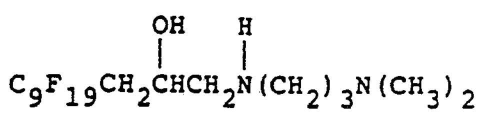 (xi)

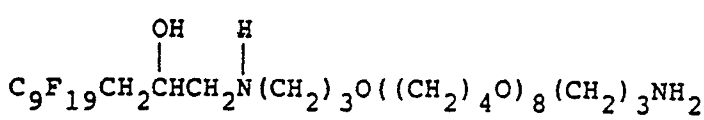 (xii)

FC-430 (xiii)

Table 5

| Compound | Acetone | Ethyl acetate | Toluene |
| --- | --- | --- | --- |
| i | O | △ | △ |
| ii | O | △ | △ |
| iii | O | O | O |
| iv | O | △ | O |
| v | O | O | O |
| vi | O | △ | △ |
| vii | O | O | O |
| viii | X | X | X |
| ix | X | X | X |
| x | X | X | X |

Note: O, △ and X denote "Soluble", "Slightly opaque or dispersed" and "Insoluble", respectively.

Table 4

| Compound | Surface tension[1)] (dyn/cm) |
| --- | --- |
| (Toluene) | (28.5) |
| i | 16.3 |
| ii | 17.6 |
| iii | 19.8 |
| iv | 23.3 |
| v | 18.7 |
| vi | 17.1 |
| vii | 23.4 |
| xi | 25.2 |
| xii | 25.0 |
| xiii | 26.7 |

Note: Surface tension of 0.1 wt % solution in toluene.

Compounds (viii) to (x) are not dissolved in toluene.

## Claims

1. A fluorine-containing compound of the formula:

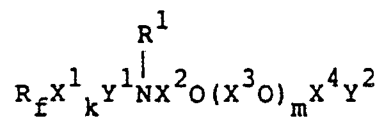

(I)

wherein

$R_f$ is a $C_3$—$C_{21}$ fluorinated hydrocarbon group or a $C_3$—$C_{21}$ fluorinated oxyhydrocarbon group;
$X^1$ is a $C_1$—$C_{11}$ hydrocarbon group;
$X^2$, $X^3$ and $X^4$ are each a $C_2$—$C_6$ hydrocarbon group;
$Y^1$ is a group of the formula:

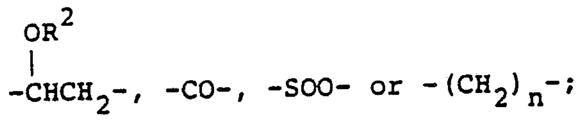

$Y^2$ is a group of the formula:

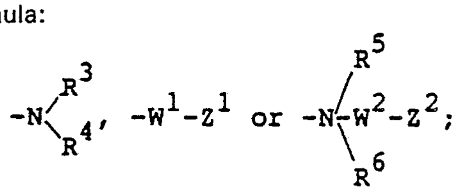

$W^1$ is a group of the formula:

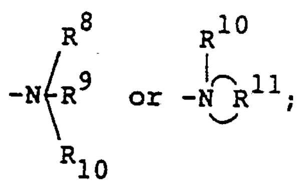

$W^2$ is a $C_1$—$C_{10}$ hydrocarbon group optionally having —OH or —COOH or a amide group in the backbone;
$Z^1$ is halogen or a group of the formula:

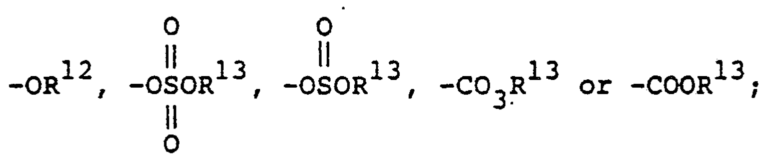

$Z^2$ is a group of the formula:

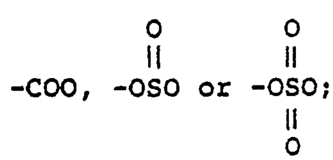

$R^1$ is hydrogen or a $C_1$—$C_5$ hydrocarbon group;
$R^2$ is hydrogen or a $C_2$—$C_4$ acyl group;
$R^3$ is hydrogen or a group of the formula: $-(X^1O)_qH$ or $-R^7Z^3$;
$R^4$ is a group of the formula: $-(X^1O)_qH$ or $-R^7Z^3$;
$R^5$ and $R^6$ are each a $C_1$—$C_{20}$ hydrocarbon group or a group of the formula: $-(X^1O)_qH$, $-X^1{}_kCOOM$, $-R_f$ or $-Y^1X^1{}_kR_f$;
$Z^3$ is a group of the formula:

$-COOM$, $-SO_3M$, $-OSO_3M$, 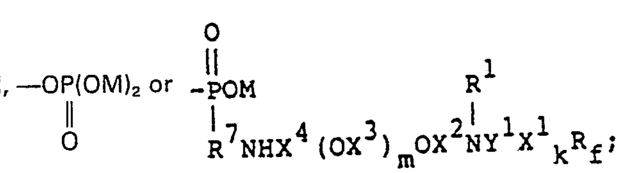

$R^7$ is a $C_1$—$C_{20}$ hydrocarbon group or a group of the formula: —$(CH_2CH_2OCH_2CH_2)_r$—;

$R^8$, $R^9$ and $R^{10}$ are each a $C_1$—$C_{20}$ hydrocarbon group or a group of the formula: —$(X^1O)_qH$, —$R_f$ or —$Y^1X^1{}_kR_f$;

$R^{11}$ is $C_2$—$C_6$ alkylene group optionally having one or two oxygen or sulfur atoms;

$R^{12}$ is hydrogen, a $C_1$—$C_{20}$ hydrocarbon group or a $C_2$—$C_{20}$ acyl group;

$R^{13}$ is hydrogen or a $C_1$—$C_{20}$ hydrocarbon group;

M is hydrogen, an alkali metal, an alkaline earth metal or a $NH_4$ group;

k is zero or one;

m is an integer of 1 to 50;

n is an integer of 1 to 5;

q is an integer of 1 to 20; and

r is an integer of 1 to 5.

2. A fluorine-containing compound according to claim 1, wherein $Y^2$ is a group of the formula:

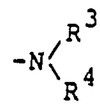

wherein $R^3$ and $R^4$ are the same as defined above.

3. A fluorine-containing compound according to claim 1, wherein $Y^2$ is a group of the formula: —$W^1$—$Z^1$ wherein $W^1$ and $Z^1$ are the same as defined above.

4. A fluorine-containing compound according to claim 1, wherein $Y^2$ is a group of the formula:

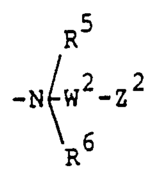

wherein $W^2$, $Z^2$, $R^5$ and $R^6$ are the same as defined above.

5. A fluorine-containing compound according to claim 1, wherein $R_f$ is selected from the group consisting of $C_5$—$C_{15}$ fluorinated aliphatic groups and $C_5$—$C_{15}$ fluorinated oxyhydrocarbon groups.

6. A fluorine-containing compound according to claim 1, wherein $R_f$ is a $C_5$—$C_{15}$ perfluorinated saturated aliphatic group.

7. A fluorine-containing compound according to claim 1, wherein $R_f$ is a group of the formula:

$C_tF_{2t+1}$-, $H-(C_tF_{2t})$-, $C_tF_{(2t-1)}$ or

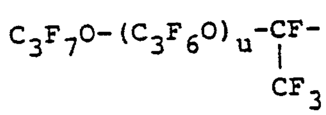

wherein t is an integer of 3 to 21 and u is an integer of 0 to 5.

8. A fluorine-containing compound according to claim 1, wherein $X^1$ is a $C_1$—$C_4$ aliphatic group.

9. A fluorine-containing compound according to claim 8, wherein $X^1$ is selected from the group consisting of —$CH_2$—, —$CH_2CH_2$—, —$CH_2CH_2CH_2$—, —$CH(CH_3)CH_2$— and —$(CH_2)_4$—.

10. A fluorine-containing compound according to claim 1, wherein $X^2$ is a $C_2$—$C_4$ aliphatic group.

11. A fluorine-containing compound according to claim 10, wherein $X^2$ is selected from the group consisting of —$CH_2CH_2$—, —$CH(CH_3)CH_2$— and —$(CH_2)_4$—.

12. A fluorine-containing compound according to claim 1, wherein $X^3$ is a $C_2$—$C_4$ aliphatic group.

13. A fluorine-containing compound according to claim 12, wherein $X^3$ is selected from the group consisting of —$CH_2CH_2$—, —$CH(CH_3)CH_2$— and —$(CH_2)_4$—.

14. A fluorine-containing compound according to claim 1, wherein $X^4$ is a $C_2$—$C_4$ aliphatic group.

15. A fluorine-containing compound according to claim 14, wherein $X^4$ is selected from the group consisting of —$CH_2CH_2$—, —$CH(CH_3)CH_2$— and —$(CH_2)_4$—.

16. A fluorine-containing compound according to claim 1, wherein $Z^1$ is selected from the group of halogen and groups of the formulas: —$OR^{12}$ and —$OSO_3R^{13}$.

17. A fluorine-containing compound according to claim 1, wherein halogen is selected from the group of iodine, bromine and chlorine.

18. A fluorine-containing compound according to claim 1, wherein $R^{12}$ is hydrogen or a $C_1$—$C_6$ aliphatic group.

19. A fluorine-containing compound according to claim 18, wherein $R^{12}$ is hydrogen or a $C_1$—$C_6$ saturated alkyl group.

20. A fluorine-containing compound according to claim 1, wherein $R^{13}$ is hydrogen or a $C_1$—$C_6$ aliphatic group.

21. A fluorine-containing compound according to claim 20, wherein $R^{13}$ is a $C_1$—$C_6$ saturated alkyl group.

22. A fluorine-containing compound according to claim 20, wherein $R^1$ and $R^2$ are hydrogens.

23. A fluorine-containing compound according to claim 1, wherein each of $R^5$ to $R^{10}$ which is the hydrocarbon group is an aliphatic, aryl or aralkyl group.

24. A fluorine-containing compound according to claim 1, wherein $R^5$ and $R^6$ are each a group of the formula: $—(X^1O)_qH$, $—X^1{}_kCOOM$, $—R_f$ or $—Y^1X^1{}_kR_f$.

**Patentansprüche**

1. Fluorhaltige Verbindung der Formel:

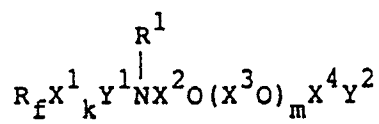

(I)

wobei

$R_f$ eine $C_{3-21}$-fluorierte Kohlenwasserstoffgruppe oder eine $C_{3-21}$-fluorierte Oxykohlenwasserstoffgruppe ist;

$X^1$ bedeutet eine $C_{1-11}$-Kohlenwasserstoffgruppe;

$X^2$, $X^3$ und $X^4$ sind jeweils eine $C_{2-6}$-Kohlenwasserstoffgruppe;

$Y^1$ bedeutet eine Gruppe der Formel:

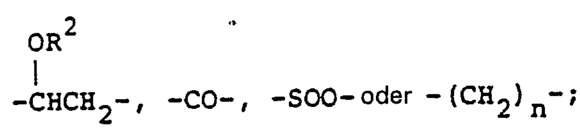

$Y^2$ ist eine Gruppe der Formel:

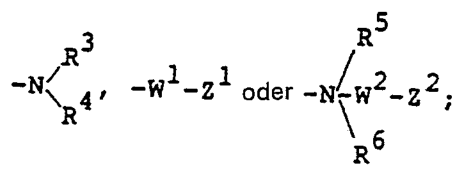

$W^1$ stellt eine Gruppe der Formel dar:

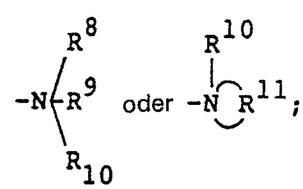

$W^2$ ist eine $C_{1-10}$-Kohlenwasserstoffgruppe, die gegebenenfalls —OH oder —COOH oder eine Amidgruppe im Gerüst trägt;

$Z^1$ ist ein Halogen oder eine Gruppe der Formel:

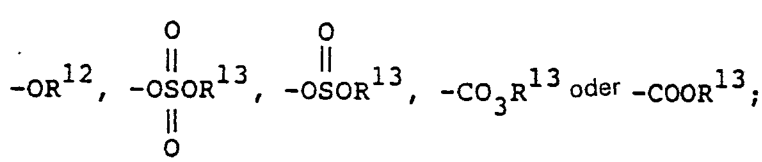

$Z^2$ stellt eine Gruppe der Formel dar:

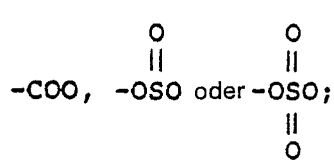

$R^1$ ist Wasserstoff oder eine $C_{1-5}$-Kohlenwasserstoffgruppe;

$R^2$ bedeutet Wasserstoff oder eine $C_{2-4}$-Acylgruppe;

$R^3$ ist Wasserstoff oder eine Gruppe der Formel: $—(X^1O)_qH$ oder $—R^7Z^3$;

$R^4$ ist eine Gruppe der Formel $—(X^1O)_qH$ oder $—R^7Z^3$;

$R^5$ und $R^6$ sind jeweils eine $C_{1-20}$-Kohlenwasserstoffgruppe oder eine Gruppe der Formel: $—(X^1O)_qH$, $—X^1{}_kCOOM$, $—R_f$ oder $—Y^1X^1{}_kR_f$;

$Z^3$ ist eine Gruppe der Formel:

—COOM, $—SO_3M$, $—OSO_3M$, 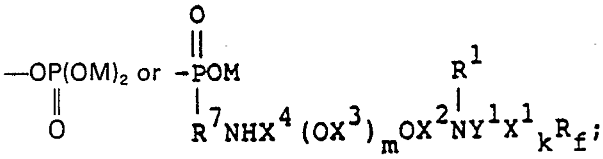

$R^7$ ist eine $C_{1-20}$-Kohlenwasserstoffgruppe oder eine Gruppe der Formel: $—(CH_2CH_2OCH_2CH_2)_r—$;

$R^8$, $R^9$ und $R^{10}$ sind jeweils eine $C_{1-20}$-Kohlenwasserstoffgruppe oder eine Gruppe der Formel: $—(X^1O)_qH$, $—R_f$ oder $—Y^1X^1{}_kR_f$;

$R^{11}$ ist eine $C_{2-6}$-Alkylengruppe, die gegebenenfalls ein oder zwei Sauerstoff- oder Schwefelatome trägt;

$R^{12}$ ist Wasserstoff, eine $C_{1-20}$-Kohlenwasserstoffgruppe oder eine $C_{2-20}$-Acylgruppe;

$R^{13}$ ist Wasserstoff oder eine $C_{1-20}$-Kohlenwasserstoffgruppe;

M ist Wasserstoff, ein Alkalimetall, ein Erdalkalimetall oder eine $NH_4$-Gruppe;

k ist 0 oder 1;

m ist eine Zahl von 1 bis 50;

n ist eine Zahl von 1 bis 5;

q ist eine Zahl von 1 bis 20; und

r ist eine Zahl von 1 bis 5.

2. Fluorhaltige Verbindung gemäss Anspruch 1, wobei $Y^2$ eine Gruppe der Formel:

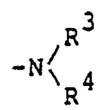 ,

ist, wobei $R^3$ und $R^4$ wie oben definiert sind.

3. Fluorhaltige Verbindung gemäss Anspruch 1, wobei $Y^2$ eine Gruppe der Formel $—W^1—Z^1$ bedeutet, und wobei $W^1$ und $Z^1$ wie oben definiert sind.

4. Fluorhaltige Verbindung gemäss Anspruch 1, wobei $Y^2$ eine Gruppe der Formel

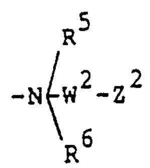

ist, und wobei $W^2$, $Z^2$, $R^5$ und $R^6$ wie oben definiert sind.

5. Fluorhaltige Verbindung gemäss Anspruch 1, wobei $R_f$ aus der Reihe, die aus $C_{5-15}$-fluorierten, aliphatischen Gruppen und $C_{5-15}$-fluorierten Oxykohlenwasserstoffgruppen besteht, ausgewählt ist.

6. Fluorhaltige Verbindung gemäss Anspruch 1, wobei $R_f$ eine $C_{5-15}$-perfluorierte, gesättigte, aliphatische Gruppe darstellt.

7. Fluorhaltige Verbindung gemäss Anspruch 1, wobei $R_f$ eine Gruppe der Formel:

$C_tF_{2t+1}-$, $H-(C_tF_{2t})-$, $C_tF_{(2t-1)}$ oder

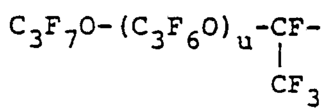 ist,

wobei t eine Zahl von 3 bis 21 und u eine Zahl von 0 bis 5 darstellt.

8. Fluorhaltige Verbindung gemäss Anspruch 1, wobei $X^1$ eine $C_{1-4}$-aliphatische Gruppe darstellt.

9. Fluorhaltige Verbindung gemäss Anspruch 8, wobei $X^1$ aus der Gruppe, die aus $—CH_2—$, $—CH_2CH_2—$, $—CH_2CH_2CH_2—$, $—CH(CH_3)CH_2—$ und $—(CH_2)_4—$ besteht, ausgewählt ist.

10. Fluorhaltige Verbindung gemäss Anspruch 1, wobei $X^2$ eine $C_{2-4}$-aliphatische Gruppe darstellt.

11. Fluorhaltige Verbindung gemäss Anspruch 10, wobei $X^2$ aus der Gruppe, die aus $—CH_2CH_2—$, $—CH(CH_3)CH_2—$ und $—(CH_2)_4—$ besteht, ausgewählt ist.

12. Fluorhaltige Verbindung gemäss Anspruch 1, wobei $X^3$ eine $C_{2-4}$-aliphatische Gruppe bedeutet.

13. Fluorhaltige Verbindung gemäss Anspruch 12, wobei $X^3$ aus der Gruppe, die aus $—CH_2CH_2—$, $—CH(CH_3)CH_2—$ und $—(CH_2)_4—$ besteht, ausgewählt ist.

14. Fluorhaltige Verbindung gemäss Anspruch 1, wobei $X^4$ eine $C_{2-4}$-aliphatische Gruppe darstellt.

15. Fluorhaltige Verbindung gemäss Anspruch 14, wobei $X^4$ aus der Gruppe, die aus $—CH_2CH_2—$, $—CH(CH_3)CH_2—$ und $—(CH_2)_4—$ besteht, ausgewählt ist.

16. Fluorhaltige Verbindung gemäss Anspruch 1, wobei $Z^1$ aus der Gruppe Halogen und den Gruppen der Formeln $—OR^{12}$ und $—OSO_3R^{13}$ ausgewählt ist.

17. Fluorhaltige Verbindung gemäss Anspruch 1, wobei das Halogen aus der Gruppe Jod, Brom und Chlor ausgewählt ist.

18. Fluorhaltige Verbindung gemäss Anspruch 1, wobei $R^{12}$ Wasserstoff oder eine $C_{1-6}$-aliphatische Gruppe darstellt.

19. Fluorhaltige Verbindung gemäss Anspruch 18, wobei $R^{12}$ Wasserstoff oder eine $C_{1-6}$-gesättigte Alkylgruppe bedeutet.

20. Fluorhaltige Verbindung gemäss Anspruch 1, wobei $R^{13}$ Wasserstoff oder eine $C_{1-6}$-aliphatische Gruppe ist.

21. Fluorhaltige Verbindung gemäss Anspruch 20, wobei $R^{13}$ eine $C_{1-6}$-gesättigte Alkylgruppe darstellt.

22. Fluorhaltige Verbindung gemäss Anspruch 20, wobei $R^1$ und $R^2$ Wasserstoff darstellen.

23. Fluorhaltige Verbindung gemäss Anspruch 1, wobei jeder der Substituenten $R^5$ bis $R^{10}$, der eine Kohlenwasserstoffgruppe ist, eine aliphatische, eine Aryl- oder eine Aralkylgruppe bedeutet.

24. Fluorhaltige Verbindung gemäss Anspruch 1, wobei $R^5$ und $R^6$ jeweils eine Gruppe der Formel $—(X^1O)_qH$, $—X^1{}_kCOOM$, $—R_f$ oder $—Y^1X^1{}_kR_f$ darstellt.

**Revendications**

1. Un composé fluoré répondant à la formule:

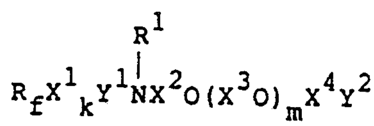 (I)

dans laquelle

$R_f$ est un groupe hydrocarboné fluoré en $C_3—C_{21}$ ou un groupe oxyhydrocarboné fluoré en $C_3—C_{21}$;

$X^1$ est un groupe hydrocarboné en $C_1—C_{11}$;

$X^2$, $X^3$ et $X^4$ représentent chacun un groupe hydrocarboné en $C_2—C_6$;

$Y^1$ est un groupe de formule:

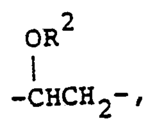, -CO-, -SOO- ou $-(CH_2)_n-$;

$Y^2$ est un groupe de formule:

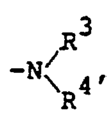, $-W^1-Z^1$ ou 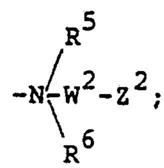;

$W^1$ est un groupe de formule

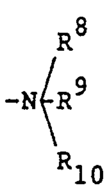 ou 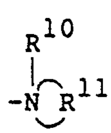;

$W^2$ est un groupe hydrocarboné en $C_1—C_{10}$ contenant éventuellement un groupe —OH ou —COOH ou un groupe amide dans le squelette;

$Z^1$ est un halogène ou un groupe de formule:

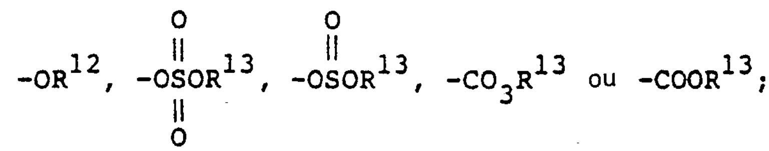

$Z^2$ est un groupe de formule:

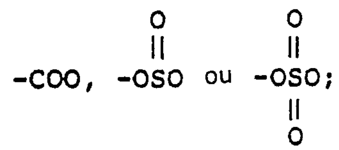

$R^1$ représente l'hydrogène ou un groupe hydrocarboné en $C_1$—$C_5$;
$R^2$ représente l'hydrogène ou un groupe acyle en $C_2$—$C_4$;
$R^3$ représente l'hydrogène ou un groupe de formule: —$(X^1O)_qH$ ou —$R^7Z^3$;
$R^4$ est un groupe de formule: —$(X^1O)_qH$ ou —$R^7Z^3$;
$R^5$ et $R^6$ représentent chacun un groupe hydrocarboné en $C_1$—$C_{20}$ ou un groupe de formule: —$(X^1O)_qH$, —$X^1{}_kCOOM$, —$R_f$ ou —$Y^1X^1{}_kR_f$;
$Z^3$ est un groupe de formule:

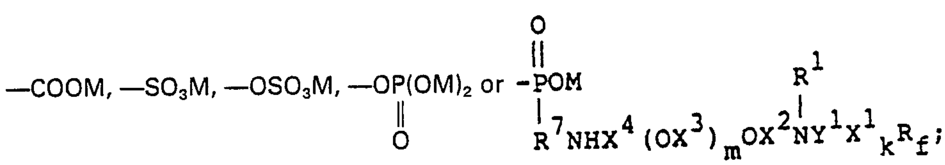

$R^7$ représente un groupe hydrocarboné en $C_1$—$C_{20}$ ou un groupe de formule —$(CH_2CH_2OCH_2CH_2)_r$—;
$R^8$, $R^9$ et $R^{10}$ représentent chacun un groupe hydrocarboné en $C_1$—$C_{20}$ ou un groupe de formule: —$(X^1O)_qH$, —$R_f$ ou —$Y^1X^1{}_kR_f$;
$R^{11}$ est un groupe alkylène en $C_2$—$C_6$ contenant le cas échéant 1 ou 2 atomes d'oxygène ou de soufre;
$R^{12}$ représente l'hydrogène, un groupe hydrocarboné en $C_1$—$C_{20}$ ou un groupe acyle en $C_2$—$C_{20}$;
$R^{13}$ représente l'hydrogène ou un groupe hydrocarboné en $C_1$—$C_{20}$;
M représente l'hydrogène, un métal alcalin, un métal alcalinoterreux ou un groupe $NH_4$;
k est égal à 0 ou 1;
m est un nombre allant de 1 à 50;
n est un nombre allant de 1 à 5;
q est un nombre allant de 1 à 20; et
r est un nombre allant de 1 à 5.

2. Un composé fluoré selon la revendication 1, dans lequel $Y^2$ est un groupe de formule:

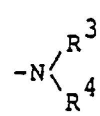

dans laquelle $R^3$ et $R^4$ ont les significations indiquées ci-dessus.

3. Un composé fluoré selon la revendication 1, dans lequel $Y^2$ est un groupe de formule: —$W^1$—$Z^1$ dans laquelle $W^1$ et $Z^1$ ont les significations indiquées ci-dessus.

4. Un composé fluoré selon la revendication 1, dans lequel $Y^2$ est un groupe de formule:

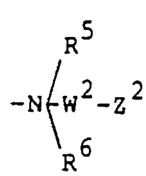

dans laquelle $W^2$, $Z^2$, $R^5$ et $R^6$ ont les significations indiquées ci-dessus.

5. Un composé fluoré selon la revendication 1, dans lequel $R_f$ est choisi parmi les groupes aliphatiques fluorés en $C_5$—$C_{15}$ et les groupes oxyhydrocarbonés fluorés en $C_5$—$C_{15}$.

6. Un composé fluoré selon la revendication 1, dans lequel $R_f$ est un groupe aliphatique saturé perfluoré en $C_5$—$C_{15}$.

7. Un composé fluoré selon la revendication 1, dans lequel $R_f$ est un groupe de formule:

$$C_tF_{2t+1}-,\ H-(C_tF_{2t})-,\ C_tF_{(2t-1)}\ \text{ou}$$

$$C_3F_7O-(C_3F_6O)_u-\underset{\displaystyle CF_3}{\underset{|}{CF}}-$$

dans lesquelles t est un nombre allant de 3 à 21 et u est un nombre allant de 0 à 5.

8. Un composé fluoré selon la revendication 1 dans lequel $X^1$ est un groupe aliphatique en $C_1$—$C_4$.

9. Un composé fluoré selon la revendication 8, dans lequel $X^1$ est choisi dans le groupe consistant en —$CH_2$—, —$CH_2CH_2$—, —$CH_2CH_2CH_2$—, —$CH(CH_3)CH_2$— et —$(CH_2)_4$—.

10. Un composé fluoré selon la revendication 1, dans laquelle $X^2$ est un groupe aliphatique en $C_2$—$C_4$.

11. Un composé fluoré selon la revendication 10, dans lequel $X^2$ est choisi dans le groupe consistant en —$CH_2CH_2$—, —$CH(CH_3)CH_2$— et —$(CH_2)_4$—.

12. Un composé fluoré selon la revendication 1, dans lequel $X^3$ est un groupe aliphatique en $C_2$—$C_4$.

13. Un composé fluoré selon la revendication 12, dans lequel $X^3$ est choisi dans le groupe consistant en —$CH_2CH_2$—, —$CH(CH_3)CH_2$— et —$(CH_2)_4$.

14. Un composé fluoré selon la revendication 1, dans lequel $X^4$ représente un groupe aliphatique en $C_2$—$C_4$.

15. Un composé fluoré selon la revendication 14, dans lequel $X^4$ est choisi dans le groupe consistant en —$CH_2CH_2$—, —$CH(CH_3)CH_2$— et —$(CH_2)_4$—.

16. Un composé fluoré selon la revendication 1, dans lequel $Z^1$ est choisi parmi les halogènes et les groupes de formule: —$OR^{12}$ et —$OSO_3R^{13}$.

17. Un composé fluoré selon la revendication 1, dans lequel l'halogène est choisi dans le groupe formé par l'iode, le brome et le chlore.

18. Un composé fluoré selon la revendication 1, dans laquelle $R^{12}$ représente l'hydrogène ou un groupe aliphatique en $C_1$—$C_6$.

19. Un composé fluoré selon la revendication 18, dans lequel $R^{12}$ représente l'hydrogène ou un groupe alkyle saturé en $C_1$—$C_6$.

20. Un composé fluoré selon la revendication 1, dans lequel $R^{13}$ représente l'hydrogène ou un groupe aliphatique en $C_1$—$C_6$.

21. Un composé fluoré selon la revendication 20, dans lequel $R^{13}$ représente un groupe alkyle saturé en $C_1$—$C_6$.

22. Un composé fluoré selon la revendication 20, dans lequel $R^1$ et $R^2$ représentent tous deux l'hydrogène.

23. Un composé fluoré selon la revendication 1, dans lequel chacun des symboles $R^5$ à $R^{10}$, représentant un groupe hydrocarboné, représente un groupe aliphatique, un groupe aryle ou aralkyle.

24. Un composé fluoré selon la revendication 1, dans lequel $R^5$ et $R^6$ représentent chacun un groupe de formule: —$(X^1O)_qH$, —$X^1{}_kCOOM$, —$R_f$ ou —$Y^1X^1{}_kR_f$.